(19) Europäisches Patentamt / European Patent Office / Office européen des brevets

(11) **EP 4 583 516 A1**

(12) **EUROPEAN PATENT APPLICATION**
published in accordance with Art. 153(4) EPC

(43) Date of publication:
**09.07.2025  Bulletin 2025/28**

(21) Application number: **23859502.9**

(22) Date of filing: **01.09.2023**

(51) International Patent Classification (IPC):
**H04N 21/431** *(2011.01)*       **G06F 3/0483** *(2013.01)*

(52) Cooperative Patent Classification (CPC):
**G06F 3/0483; H04N 21/431**

(86) International application number:
**PCT/CN2023/116565**

(87) International publication number:
**WO 2024/046475 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.09.2022  CN 202211072095**
**02.09.2022  CN 202211075030**

(71) Applicant: **Beijing Youzhuju Network Technology Co., Ltd.**
**Beijing 101299 (CN)**

(72) Inventors:
• **FENG, Lan**
 **Beijing 100028 (CN)**
• **LIU, Chao**
 **Beijing 100028 (CN)**

• **BAI, Zhe**
 **Beijing 100028 (CN)**
• **MAO, Yunfei**
 **Beijing 100028 (CN)**
• **GUI, Shidan**
 **Beijing 100028 (CN)**
• **HAN, Shanglin**
 **Beijing 100028 (CN)**
• **ZHAI, Guoteng**
 **Beijing 100028 (CN)**
• **WANG, Zhikai**
 **Beijing 100028 (CN)**
• **LI, Xun**
 **Beijing 100028 (CN)**

(74) Representative: **Dentons UK and Middle East LLP**
**One Fleet Place**
**London EC4M 7WS (GB)**

(54) **DISPLAY METHOD AND APPARATUS, ELECTRONIC DEVICE, AND COMPUTER-READABLE MEDIUM**

(57)  The present application discloses a display method and apparatus, an electronic device, and a computer-readable medium. The method comprises: when a client is displaying a video playing page, the client being capable of displaying some first candidate objects to a user, and after the client receives a trigger operation for a target control on the video playing page, displaying an information recommendation page, and displaying, on the information recommendation page, a set of recommended information corresponding to an object to be referenced, wherein the set of recommended information comprises account attribute information of several candidate accounts; objects to be displayed under each candidate account include a target display object; an object category of the target display object is the same as an object category corresponding to the set of recommended information; and the object category corresponding to the set of recommended information is also the same as the category of the object to be referenced, such that these candidate accounts can provide, to the user, some objects of the same category as the object to be referenced, and in this way, an information viewing requirement of the user can be better met.

EP 4 583 516 A1

displaying a video playing page

S101

displaying an information recommendation page, in response to a trigger operation for a target control on the video playing page, in which a recommended information set corresponding to an object for reference is displayed on the information recommendation page, the object for reference is determined according to follow state representation information of at least one first candidate object corresponding to the video playing page, the recommended information set comprises account attribute information of several candidate accounts, objects to be displayed under each of the candidate accounts comprise a target display object, an object category of the target display object is same as an object category corresponding to the recommended information set, and the object category corresponding to the recommended information set is same as an object category of the object for reference

S102

Fig. 1

**Description**

The present application claims the priority of China patent application filed in China Patent Office on September 02, 2022, with application number of 202211072095.9 and application name of " DISPLAY METHOD AND APPARATUS, ELECTRONIC DEVICE, AND COMPUTER-READABLE MEDIUM". The present application also claims the priority of China patent application filed in China Patent Office on September 02, 2022, with application number of 202211075030.X and application name of " DISPLAY METHOD AND APPARATUS, ELECTRONIC DEVICE, AND COMPUTER-READABLE MEDIUM ", the entire contents of which are incorporated into this application by reference.

TECHNICAL FIELD

The present disclosure relates to a field of Internet technology, and more particularly, to a display method and a display apparatus, an electronic device, and a computer-readable medium.

BACKGROUND

Live streaming is an information network releasing method having a bidirectional circulation process in which information is fabricated and published synchronously on site as an event occurs and develops.

With respect to some live rooms, the live room may display some objects (e.g., commodities, etc.) to a user, so that the viewer of the live room may not only learn about these objects in the live room, but also execute some interactive operations (e.g., interactive operations such as adding to favorites, trading, etc.) on these objects.

In some cases, with respect to a viewer of a live room, when the viewer finds an object of interest within the live room, he/she may want to view other objects related to (e.g., objects of the same category as) the object, so that how to view these other objects becomes an urgent technical problem to be solved.

SUMMARY

In order to solve the above technical problems, the present application provides a display method and a display apparatus, an electronic device, and a computer-readable medium.

In order to achieve the above purpose, the technical scheme provided by this application is as follows.

The present application provides a display method comprising:

displaying a video playing page;
displaying an information recommendation page, in response to a trigger operation for a target control on the video playing page, in which a recommended information set corresponding to an object for reference is displayed on the information recommendation page; the object for reference is determined according to follow state representation information of at least one first candidate object corresponding to the video playing page; the recommended information set comprises account attribute information of several candidate accounts, objects to be displayed under each candidate account comprise a target display object, an object category of the target display object is same as an object category corresponding to the recommended information set; and the object category corresponding to the recommended information set is same as an object category of the object for reference.

In one possible embodiment, the follow state representation information comprises historical operation behavior information and video explanation information;

if historical operation behavior information of a first target object among the at least one first candidate object meets a first preset condition, then the object for reference is determined according to the first target object;
if none of the historical operation behavior information of the respective first candidate objects meets the first preset condition, then the object for reference is determined according to video explanation information of the at least one first candidate object.

In one possible embodiment, if none of the historical operation behavior information of the respective first candidate objects meets the first preset condition, and video explanation information of a second target object among the at least one first candidate object meets a second preset condition, then the object for reference is determined according to the second target object.

In one possible embodiment, the historical operation behavior information comprises a click count; the first preset condition is a click count of the first target object being greater than a preset count threshold.

In one possible embodiment, the second preset condition comprises: the video explanation information of the second target object being that the second target object is in a state of being explained on the video playing page;
or,
the second preset condition comprises: the video explanation information of the second target object being that the second target object is in a state of having been explained on the video playing page, and an explanation completion moment of the second target object is later than an explanation completion moment of other object in the state of having been explained on the video playing page.

In one possible embodiment, the follow state representation information comprises historical operation behavior information; and

after displaying the video playing page, the method further comprises:

updating historical operation behavior information of a third target object, in response to a trigger operation for the third target object among the at least one first candidate object corresponding to the video playing page.

In one possible embodiment, the recommended information set further comprises object display information of the target display object under each of the candidate account.

In one possible embodiment, an object to be classified is the object for reference or the target display object;

an object category of the object to be classified is determined according to object description information of the object to be classified and a pre-built object classification model; and the object classification model is used for classifying the object description information of the object to be classified.

In one possible embodiment, the video playing page is used for displaying a first live video; and/or, an information display page corresponding to the candidate account is used for displaying a second live video.

The present application provides a display apparatus comprising:

a first display unit, configured to display a video playing page; and

a second display unit, configured to display an information recommendation page, in response to a trigger operation for a target control on the video playing page, wherein a recommended information set corresponding to an object for reference is displayed on the information recommendation page; the object for reference is determined according to follow state representation information of at least one first candidate object corresponding to the video playing page; the recommended information set comprises account attribute information of several candidate accounts, objects to be displayed under each candidate account comprises a target display object, an object category of the target display object is same as an object category corresponding to the recommended information set; and the object category corresponding to the recommended information set is same as an object category of the object for reference.

As compared with the existing technologies, the present disclosure at least has advantages below:

In the technical solutions provided by the present disclosure, with respect to a client used by a viewer of a certain piece of video data, when displaying a video playing page, the client may display some first candidate objects to the viewer; and after receiving a trigger operation for a target control on the video playing page, the client may display an information recommendation page, and display a recommended information set corresponding to an object for reference among these first candidate objects on the information recommendation page. The recommended information set includes account attribute information of several candidate accounts, and objects to be displayed under each candidate account include a target display object; an object category of the target display object is the same as an object category corresponding to the recommended information set, and the object category corresponding to the recommended information set is also the same as a category of the object for reference, so that these candidate accounts may supply the viewer with some other objects (e.g., objects of the same category as the object for reference) related to the object for reference.

It can be seen that the above-mentioned object for reference is determined according to follow state representation information of at least one first candidate object corresponding to the video playing page, so that the object for reference may represent an object the viewer is interested in; and thus it may be inferred that the viewer may be interested in other objects (e.g., objects of the same category as the object for reference) related to the object for reference; therefore, after the recommended information set corresponding to the object for reference is recommended to the viewer, the viewer may view other objects related to the object for reference with the help of the recommended information set, which may better meet object viewing experience for the viewer and is favorable for improving user experience.

The present application provides a display method comprising:

displaying a video playing page, wherein the video playing page comprises a target control; and

displaying an information recommendation page, in response to a trigger operation for the target control, in which the information recommendation page comprises several recommended information sets, and each of the recommended information sets corresponds to a different object category; each of the recommended information sets comprises account attribute information of several candidate accounts, each of objects to be displayed under each candidate account in a same recommended information set comprises a target display object, and an object category of the target display object is same as an object category corresponding to the recommended information set.

In one possible embodiment, the information recommendation page displays account attribute information of a target account among the several candidate accounts, and the method further comprises:

displaying an information display page corresponding to the target account, in response to a trigger operation for the account attribute information of the target account.

In one possible embodiment, each recommended information set further comprises object display information of a target display object under several candidate accounts.

In one possible embodiment, the object display information comprises at least one of text description information and picture description information.

In one possible embodiment, when the information recommendation page displays the object display information of the target display object under the target account among the several candidate accounts, the method further comprises:

displaying the information display page corresponding to the target account, and displaying an information display interface corresponding to the target display object under the target account on the information display page corresponding to the target account, in response to a trigger operation for the object display information.

In one possible embodiment, the information recommendation page further comprises several category tags; there is one-to-one correspondence between the several category tags and the several recommended information sets; and the recommended information set being currently displayed on the information recommendation page is a recommended information set corresponding to a first tag among the several category tags; the method further comprises:

switching the recommended information set displayed on the information recommendation page from the recommended information set corresponding to the first tag to a recommended information set corresponding to a second tag, in response to a trigger operation for the second tag among the several category tags.

In one possible embodiment, there is a target reference object that meets a preset condition among the at least one first candidate object corresponding to the video playing page;

the object category corresponding to the recommended information set is same as an object category of the target reference object.

In one possible embodiment, the preset condition is: a video explanation state of the target reference object on the video playing page meeting a preset state condition;

or,

the preset condition is: historical operation information of the target reference object meeting a preset operation condition.

In one possible embodiment, the object category of the target display object is determined according to object description information of the target display object and a pre-built object classification model; the object classification model is used for classifying the object description information of the target display object;

In one possible embodiment, the object classification model is trained by using object description information of at least one object for reference and classification annotation information of the at least one object for reference.

In one possible embodiment, the video playing page is used for displaying a first live video; and/or, an information display page corresponding to the candidate account is used for displaying a second live video.

In one possible embodiment, the account attribute information comprises at least one of an identifier icon corresponding to the candidate account and an identifier text corresponding to the candidate account.

The present application further provides a display apparatus comprising:

a first display unit, configured to display a video playing page, wherein the video playing page comprises a target control; and

a second display unit, configured to display an information recommendation page, in response to a trigger operation for the target control, wherein an information recommendation page comprises several recommended information sets, and each of the recommended information sets corresponds to a different object category; each of the recommended information sets comprises account attribute information of several candidate accounts, and objects to be displayed under each candidate account in a same recommended information set each comprises a target display object, and an object category of the target display object is same as an object category corresponding to the recommended information set.

As compared with the existing technologies, the present disclosure at least has advantages below:

In the technical solution provided by the present disclosure, with respect to a client used by a viewer of a certain piece of video data, when displaying a video playing page, the client may display an information recommendation page, after receiving a trigger operation (e.g., a click operation) for a target control on the video playing page. The information recommendation page includes several recommended information sets, and each recommended information set corresponds to a different object category; each recommended information set includes account attribute information of several candidate accounts; objects to be displayed under each candidate account in the same recommended information set include a target display object; and an object category of the target display object is the same as an object category corresponding to the recommended information set.

It can be seen that the above information recommendation page includes several recommended information sets, and each recommended information set corresponds to a different object category, so that the information recommendation page can supply the user with recommended information sets under some object categories, and the user can view recommended information sets under different object categories from the information recommendation page, which may better meet information viewing needs of the user and improve user experience.

The present application provides an electronic device which comprises a processor and a memory;

> the memory is configured to store instructions or computer programs; and
> the processor is configured to execute the instructions or the computer programs in the memory, so as to cause the electronic device to execute the method provided by the present application.

The present application further provides a computer-readable medium with instructions or computer programs stored thereon, upon the instructions or computer programs running on a device, the device is caused to execute the method provided by the present application.

The present application further provides a computer program product which comprises a computer program carried on a non-temporary computer-readable medium, the computer program comprises program codes for executing the method provided by the present application.

BRIEF DESCRIPTION OF DRAWINGS

To describe the technical solutions in the embodiments of the present disclosure or in the prior art more clearly, the accompanying drawings required in the description of the embodiments or the prior art will be described briefly below. Apparently, the drawings in the following description are only some examples recorded in the present application, other accompanying drawings can also be derived from these drawings by those ordinarily skilled in the art without creative efforts.

> Fig. 1 is a flow chart of a display method provided by an embodiment of the present disclosure;
> Fig. 2 is a schematic diagram of a video playing page provided by an embodiment of the present disclosure;
> Fig. 3 is a schematic diagram of another video playing page provided by an embodiment of the present disclosure;
> Fig. 4 is a structural schematic diagram of a display apparatus provided by an embodiment of the present disclosure;
> Fig. 5 is a flow chart of a display method provided by an embodiment of the present disclosure;
> Fig. 6 is a structural schematic diagram of a display apparatus provided by an embodiment of the present disclosure; and
> Fig. 7 is a structural schematic diagram of an electronic device provided by an embodiment of the present disclosure.

DETAILED DESCRIPTION

Through study, it is found that for a viewer of video data, in some cases, when the viewer is interested in a certain object displayed in the live video, the viewer is also likely to be interested in objects of the same category as the certain object. However, in some related solutions, the viewer may firstly leave the current live video and then traverse a large number of other live videos to find these similar objects from the objects displayed in these live videos, which wastes a lot of time of the viewer, resulting in a relatively poor object viewing experience for the viewer.

Based on the above-described findings, in order to solve the technical problems described in the background section, embodiments of the present disclosure provide a display method; and the method includes the followings: with respect to a client used by a viewer of a certain piece of video data, when displaying a video playing page, the client may display some first candidate objects to the viewer; and after receiving a trigger operation for a target control on the video playing page, the client may display an information recommendation page, and display a recommended information set corresponding to an object for reference among these first candidate objects on the information recommendation page; the recommended information set includes account attribute information of several candidate accounts, and objects to be displayed under each candidate account of the several candidate accounts include a target display object; an object category of the target display object is the same as an object category corresponding to the recommended information set, and the object category corresponding to the recommended information set is also the same as an category of the object for reference, so that these candidate accounts may supply the viewer with some other objects (e.g., objects of the same category as the object for reference) related to the object for reference.

It can be seen that the above object for reference is determined according to follow state representation information of at least one first candidate object corresponding to the video playing page, so that the object for reference can represent an object the viewer is interested in; and thus it may be inferred that the viewer may be interested in other objects related to (e.g., objects of the same category as the object for reference) the object for reference; so, after the recommended information set corresponding to the object for reference is recommended to the viewer, the viewer may view other objects related to the object for reference with the help of the recommended information set, which may better satisfy the object viewing experience for the viewer and is favorable for improving user experience.

In addition, an execution subject of the display method provided by the embodiments of the present disclosure are not limited in the embodiments of the present disclosure; for example, the display method provided by the embodiments of the present disclosure may be applied to a terminal device or a server. For another example, the display method provided by the embodiments of the present disclosure may also be implemented through a data exchange process between the terminal device and the server. Wherein the terminal device may be a smartphone, a computer, a personal digital assistant (PDA), a portable android device, etc. The server may be an independent server, a cluster server, or a cloud server.

In order to make those skilled in the art to better understand the solution of the present disclosure, the technical solutions in the embodiments of the present disclosure will be described in a clearly and fully understandable way in conjunction with the accompanying drawings related to the embodiments of the present disclosure. It is obvious that the described embodiments are just a part but not all of the embodiments of the present disclosure. Based on the described embodiments herein, those ordinarily skilled in the art can acquire other embodiment(s), without any inventive work, which should be within the scope of the present disclosure.

In order to better understand the technical solution provided by the present disclosure, the information display method provided by the present disclosure will be firstly illustrated below in conjunction with some accompanying drawings.

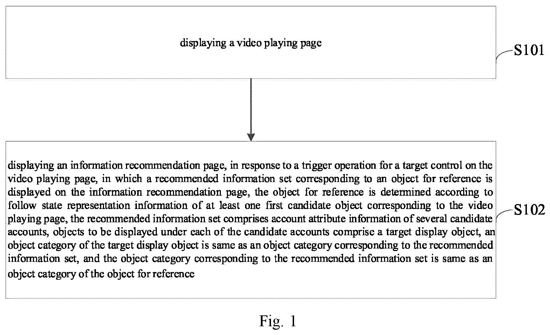

As shown in Fig. 1, the display method provided by the embodiment of the present disclosure may include step S101 to step S102 as follows.

S101: displaying a video playing page.

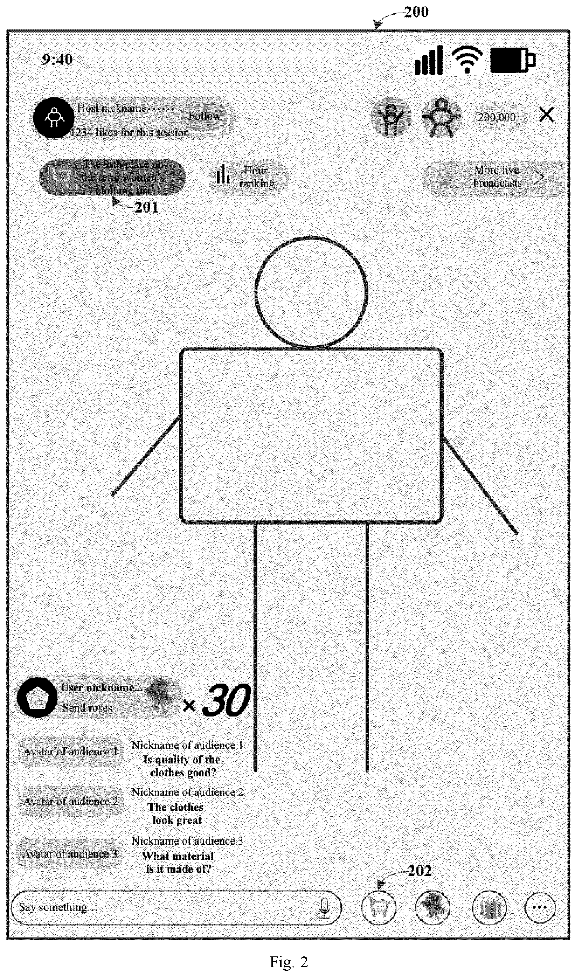

The video playing page refers to a playback region of one piece of video data. That is, one piece of video data may occupy the whole region on the video playing page for display. In addition, the video playing page are not limited in the embodiments of the present disclosure, for example, the video playing page may be a live video page (e.g., a live video page 200 shown in Fig. 2) or a short video page. It can be seen that in one possible implementation, the video playing page may be used for displaying a first live video (e.g., a live video displayed within the page 200 in Fig. 2, etc.). The first live video refers to a live video played on the video playing page.

In addition, the video playing page may be used for displaying and processing at least one first candidate object corresponding to the video playing page. The first candidate object refers to an object on which some operations (e.g., interactive operations such as viewing and trading) may be performed within the live room represented by the above video playing page. That is, with respect to the live room represented by the video playing page, the viewer of the live room may execute some interactive operations (e.g., interactive operations such as viewing and trading) on the first candidate object within the live room.

In addition, the first candidate object are not limited in the embodiments of the present disclosure; for example, in the case where the above video playing page is a live video page (e.g., the live video page 200 shown in Fig. 2), the first candidate object may be any commodity explained by the live video on the above video playing page, or may also be any trailer commodity displayed through certain operations (e.g., through clicking on a control 202 shown in Fig. 2), or may also be any storefront commodity displayed through certain operations (e.g., through clicking on a certain control).

It should be noted that the above trailer commodity are not limited in the embodiments of the present disclosure; for example, the trailer commodity may at least include two parts of commodities: a first part of commodity may be a commodity being explained, and a second part of commodity may be a commodity not being explained. In addition, the above storefront commodity are not limited in the embodiments of the present disclosure; for example, the storefront commodity may refer to a commodity displayed on a storefront display page corresponding to the above live video page. In addition, association correspondence between the trailer commodity and the storefront commodity are not limited in the embodiments of the present disclosure; for example, there may be or not be an intersection between the trailer commodity and the storefront commodity.

Based on the relevant content of the above S101, it can be seen that with respect to a client used by a viewer of a certain piece of video data, when displaying a video playing page, the client may display some first candidate objects to the viewer, so that the viewer may perform an interactive operation such as viewing (or trading) on one or more objects among these first candidate objects on the video playing page.

S102: displaying an information recommendation page, in response to a trigger operation for a target control on the video playing page, in which a recommended information set corresponding to an object for reference is displayed on the information recommendation page, the object for reference is determined according to follow state representation information of at least one first candidate object corresponding to the video playing page, the recommended information set comprises account attribute information of several candidate accounts, objects to be displayed under each of the candidate accounts comprise a target display object, an object category of the target display object is same as an object category corresponding to the recommended information set, and the object category corresponding to the recommended information set is same as an object category of the object for reference.

The target control is used for triggering an information recommendation process; moreover, the target control are not limited in the embodiments of the present disclosure; for example, the target control may be the control 201 shown in Fig. 2.

The object for reference refers to an object the user is interested in among the at least one first candidate object corresponding to the above video playing page.

In addition, a determination process of the above object for reference are not limited in the embodiments of the present disclosure; for example, the determination process of the above object for reference may specifically be as follows: determining the object for reference according to the follow state representation information of the at least one first candidate object corresponding to the video playing page. The follow state representation information is used for representing a degree in which the first candidate object is concerned (i.e., a degree in which the user is interested in the first candidate object).

In addition, an implementation of the above follow state representation information is not limited in the embodiments of the present disclosure; for example, the implementation of the follow state representation information may be implemented by using any existing or future information that may express the degree in which the user is interested in the first candidate object.

Through study, it is found that with respect to the viewer of the above video playing page, in some cases, if the viewer is interested in a certain object displayed on the video playing page, then the viewer may trigger many operations for the object; however, in other cases (e.g., when the viewer of the video playing page rarely triggers operations for the first candidate object corresponding to the video playing page), the viewer may also be interested in an object being explained or an object that has been just explained in the live video. Based on this, the embodiment of the present disclosure provides one possible implementation of the above follow state representation information which may specifically include: historical operation behavior information and video explanation information. The historical operation behavior information is used for representing the operations the user has triggered for the first candidate object on the video playing page. The video explanation information is used for representing a state (e.g. being explained, having been already explained, not explained) presented by the first candidate object in the video data played on the video playing page.

Based on content of the previous paragraph, the embodiment of the present disclosure further provides a possible implementation of the above step of "determining the object for reference according to the follow state representation information of the at least one first candidate object corresponding to the video playing page", and the implementation may specifically include step 1 to step 2.

Step 1: determining the object for reference according to a first target object, if the historical operation behavior information of the first target object among the above at least one first candidate object meets a first preset condition.

The first target object refers to the first candidate object whose historical operation behavior information meets the first preset condition; moreover, the determination process of the first target object is not limited in the embodiments of the present disclosure; for example, in the case where the above "at least one first candidate object" includes N first candidate objects, the determination process of the first target object may specifically be as follows: after acquiring the historical operation behavior information of an $n$-th first candidate object, it may be judged whether the historical operation behavior information of the $n$-th first candidate object meets the first preset condition; if the historical operation behavior information of the $n$-th first candidate object meets the first preset condition, it may be determined that the viewer of the above video playing page is interested in the $n$-th first candidate object, and thus the $n$-th first candidate object may be regarded as the first target object (i.e., the object the user is interested in), so that subsequently objects of the same category as the $n$-th first candidate object may be displayed by the above information recommendation page. n is a positive integer, $n \leq N$, and N is a positive integer.

The first preset condition is used for describing a condition reached by the historical operation behavior information of the object the user is interested in; moreover, the first preset condition is not limited in the embodiments of the present disclosure, for example, in the case where the historical operation behavior information includes a click count (e.g., a total count of operation triggers), the first preset condition may specifically be: the click count being greater than a preset count threshold. The preset count threshold may be preset.

In addition, an acquisition process of the above historical operation behavior information is not limited in the embodiments of the present disclosure, for example, in order to better ensure real-time performance of the historical operation behavior information, the embodiment of the present disclosure further provides one possible implementation of the above display method; in this implementation, in the case where the above follow state representation information at least includes the historical operation behavior information, the display method may further include the step 1 below. Execution time of the step 1 is later than execution time of the step S101 above.

Step 1: updating historical operation behavior information of a third target object, in response to a trigger operation for the third target object among the at least one first candidate object corresponding to the above video playing page.

The third target object refers to a first candidate object on which a preset operation (e.g., an operation such as clicking, adding to favorites, adding to a shopping cart, searching, viewing, etc.) is performed on; moreover, the third target object is not limited in the embodiments of the present disclosure, for example, the third target object may be any first candidate object. The preset operation may be preset, for example, the preset operation may include operations such as clicking, adding to favorites, adding to a shopping cart, searching, viewing, etc.

In addition, the above "trigger operation for the third target object among at least one first candidate object" are not limited in the embodiments of the present disclosure; for example, it may be any operation (e.g., clicking, adding to favorites, adding to a shopping cart, searching, viewing, etc.) triggered for the third target object.

In addition, the above "historical operation behavior information of the third target object" is not limited in the embodiments of the present disclosure, for example, the historical operation behavior information of the third target object may include: a click count of the third target object, so that the click count may represent a degree of concern in the third target object, and thus the click count of the third target object may represent a degree in which the viewer on the above video playing page is interested in the third target object. The click count refers to a total count of various operations (e.g., operations such as clicking, adding to favorites, adding to a shopping cart, searching, viewing, etc.) triggered for the third target object.

Furthermore, an update process of the above "click count of the third target object" is not limited in the embodiments of the present disclosure; for example, the update process of the click count of the third target object may be implemented by using a preset update rule. The update rule may be set according to application scenarios. For ease of understanding, it will be illustrated below in conjunction with an example.

As an example, in the case where the above "at least one first candidate object" includes N first candidate objects, a determination process of the click count on the N first candidate objects may specifically include step 11 to step 12 below:

> Step 11: determining a preset initialization value (e.g., 0) as the click count of the $n$-th first candidate object, after opening the above video playing page on the client (e.g., after the viewer of the client enters the live room displayed on the video playing page), where n is a positive integer, n≤N, and N is a positive integer.
>
> Step 12: updating the click count of the $n$-th first candidate object, by using formula (1) below, after the client receives a trigger operation for the $n$-th first candidate object, where n is a positive integer, n≤N, and N is a positive integer.

$$H_n'=H_n+1 \qquad (1)$$

In the formula (1), $H_n'$ represents an updated value of the click count of the $n$-th first candidate object, and $H_n$ represents a value of the click count of the $n$-th first candidate object before the updating.

Based on the relevant content of step 11 to step 12 as described above, it can be known that in one possible implementation, in the case where the above third target object is the $n$-th first candidate object, and the historical operation behavior information of the third target object includes the click count of the third target object, the above step 1 may specifically be: updating the historical operation behavior information of the third target object by using the above formula (1), in response to the trigger operation for the third target object.

Based on the relevant content of step 1 above, it can be known that, with respect to a client used by a viewer of a certain piece of video data, when the client is displaying a video playing page and the video playing page displays at least one first candidate object, after the client receives the trigger operation (e.g., an operation such as clicking, adding to favorites, adding to a shopping cart, searching, viewing, etc.) for the third target object among these first candidate objects, the click count of the third target object is updated by using the above formula (1), so that the click count may better represent the degree in which the viewer is interested in the third target object, to facilitate subsequently judging whether the viewer is interested in the third target object based on the click count.

In addition, an implementation of the step of "determining the object for reference according to the first target object" in the above step 1 is not limited in the embodiments of the present disclosure, for example, in the case where there is only one first target object among the above at least one first candidate object, the first target object may be directly determined as the object for reference. For another example, in the case where there are a plurality of first target objects among the above at least one first candidate object, the first target object with the greatest click count among these first target objects may be determined as the object for reference.

Based on the relevant content of the above-described step 1, it can be known that with respect to a client used by a viewer of a certain piece of video data, when the client is displaying a video playing page, the client may judge whether there is a first target object whose historical operation behavior information meets the first preset condition among the at least one first candidate object corresponding to the video playing page, after receiving a trigger operation (e.g., a click operation) for a target control on the video playing page; if there is, it may be determined that the viewer is interested in the first target object, so, the object for reference may be determined according to the first target object, so that the object for reference may represent a characteristic (e.g., the category that the object the viewer is interested in belongs to) of the object the viewer is interested in.

Step 2: determining the object for reference according to the video explanation information of the above at least one first candidate object, if none of the historical operation behavior information of the respective first candidate objects meets the first preset condition.

Video explanation information of the *n-th* first candidate object is used for representing a state (e.g., being explained, having been already explained, not explained) presented by the *n-th* first candidate object in the live video played on the above video playing page. N is a positive integer, n≤N.

In addition, an implementation of the step of "determining the object for reference according to the video explanation information of the above at least one first candidate object" in the above step 2 is not limited in the embodiments of the present disclosure. For ease of understanding, it will be illustrated below in conjunction with one possible implementation of step 2.

In one possible implementation, S102 may specifically be as follows: determining the object for reference according to a second target object, if none of the historical operation behavior information of the respective first candidate objects meets the first preset condition, and the video explanation information of the second target object among the above at least one first candidate object meets a second preset condition. The second target object refers to a first candidate object whose video explanation information meets the second preset condition. The second preset condition may be preset.

Actually, it is found through study that with respect to the viewer of the above video playing page, the viewer may also be interested in an object being explained or an object that has been just explained in the live video. Based on this, the embodiment of the present disclosure further provides two possible implementations of the above second preset condition, which will be respectively illustrated below.

In one possible implementation, the above second preset condition may specifically be as follows: the above "video explanation information of the second target object" representing that the video data played by the video playing page is explaining the second target object (i.e., the "video explanation information of the second target object" being that the second target object is in a state of being explained on the video playing page). It can be seen that with respect to the video data played on the video playing page, in some cases, the second target object may refer to an object being explained by the video data.

In the other possible implementation, the above second preset condition may specifically be as follows: the above "video explanation information of the second target object" being that the second target object is in a state of having been explained on the above video playing page, and an explanation completion moment of the second target object is later than an explanation completion moment of other object in the state of having been explained on the above video playing page. It can be seen that with respect to the video data played on the video playing page, in some cases, the second target object may refer to an object that has been just explained by the video data.

In addition, the implementation of the step of "determining the object for reference according to the second target object" in the above step 2 is not limited in the embodiments of the present disclosure, for example, in the case where there is only one second target object among the above at least one first candidate object, then the second target object may be directly determined as the object for reference. For another example, in the case where there are a plurality of second target objects among the above at least one first candidate object, a second target object with the latest explanation start moment among these second target objects may be determined as the object for reference.

Based on the relevant content of the above-described step 2, it can be known that with respect to a client used by a viewer of a certain piece of video data, when the client is displaying a video playing page, the client may judge whether there is a first target object whose historical operation behavior information meets the first preset condition among the at least one first candidate object corresponding to the video playing page, after receiving a trigger operation (e.g., a click operation) for a target control on the video playing page, if there is no such object, then it may be inferred that the viewer may also be interested in an object being explained or an object that has been just explained in the live video, so, the client may determine the object for reference from these first candidate objects by using the video explanation information of these first candidate objects, so that the object for reference may represent a characteristic (e.g., the category that the object the viewer is interested in belongs to) of the object the viewer is interested in.

Based on the relevant content of step 1 to step 2 above, it can be known that with respect to a client used by a viewer of a certain piece of video data, when the client is displaying a video playing page, after the client receives a trigger operation (e.g., a click operation) for a target control on the video playing page, the client may firstly filter the object for reference according to the historical operation behavior information of the at least one first candidate object corresponding to the video playing page, so that after determining that no object for reference can be filtered out, the client may further filter the object for reference by using the video explanation information of these first candidate objects. This may ensure that the object for reference may represent the object the viewer is interested in as much as possible, so that the object category of the object for reference may represent the object category the viewer is more interested in as much as possible, which is favorable for improving accuracy of information recommendation.

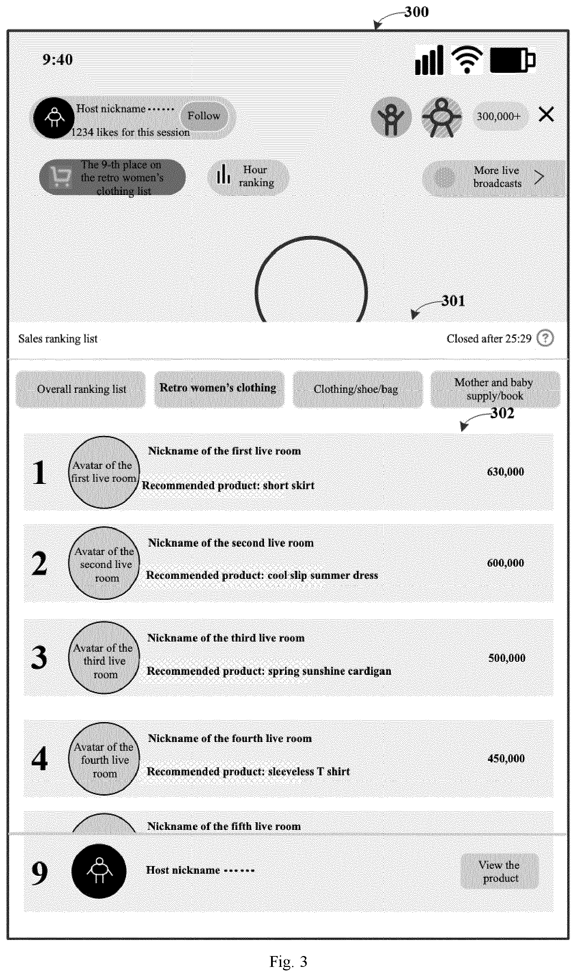

The above "recommended information set corresponding to the object for reference" refers to information that needs to be recommended determined according to the object category of the object for reference; and the object category corresponding to the "recommended information set corresponding to the object for reference" is the same as the object category of the object for reference. For example, in the case where the object category of the object for reference includes a category of retro women's clothing shown in Fig. 3, then the "recommended information set corresponding to the object for reference" includes recommended information under the category of retro women's clothing shown in Fig. 3 (e.g., relevant information of a first live room, etc.).

It should be noted that the object category corresponding to the above "recommended information set corresponding to the object for reference" is the same as the object category of the object for reference, which may refer to that the two are the same partially or the same completely. The so-called being the same partially specifically refers to that: in the case where the number of object categories of the above object for reference is a plural, if the object category corresponding to the "recommended information set corresponding to the object for reference" is the same as a certain object category of the object for reference, a conclusion may be drawn that the object category corresponding to the "recommended information set corresponding to the object for reference" is the same as the object category of the object for reference.

In addition, the above "object category of the object for reference" is not limited in the embodiments of the present disclosure; for example, the object category of the object for reference may include any type of classification information related to the object for reference.

Actually, it is found through study that in some application scenarios, when a user is interested in a certain object, the user may prefer to view other objects that are similar to the object in terms of object category, object attribute, or object topic, etc. Based on this, the embodiment of the present disclosure further provides one possible implementation of the above "object category of the object for reference"; in this implementation, the "object category of the object for reference" may be used for representing a classification situation presented by the object for reference in some aspects (e.g., aspects such as object category, object attribute, object topic, etc.). The object category is used for describing a class affiliation of an object (e.g., multi-level classes such as clothing/spring clothing/upper garment/...etc.). The object attribute is used for describing properties possessed by an object (e.g., shape, color, odor, material, etc.). The object topic is used for describing a topic affiliation of an object (e.g., a topic such as retro women's clothing, etc.).

In addition, an acquisition process of the above "object category of the object for reference" is not limited in the embodiments of the present disclosure; for example, any existing or future method that may be used for acquiring category information of a certain object may be adopted for implementation.

In fact, in order to better improve accuracy of object categories, an object category of a certain object may be determined with the help of a pre-built classification model. Based on this, the embodiment of the present disclosure further provides one possible implementation of the acquisition process of the above "object category of the object for reference"; and for ease of understanding, it will be illustrated below by taking the determination process of the object category of the object to be classified as an example. The object to be classified may be any object (e.g., the above object for reference or the above target display object, etc.).

As an example, the determination process of the object category of the object to be classified may be as follows: determining the object category of the object to be classified, according to object description information of the object to be classified and a pre-built object classification model. The object classification model is used for classifying the object description information of the object to be classified; moreover, the implementation of the object classification model is not limited in the embodiments of the present disclosure; for example, the implementation of the object classification model may be implemented by using any existing or future model having a classification function.

In addition, in order to better improve a classification effect, the embodiment of the present disclosure further provides one possible implementation of the above step of "determining the object category of the object to be classified, according to object description information of the object to be classified and a pre-built object classification model" which may specifically include step 31 to step 32 below.

Step 31: performing a feature extraction processing on the object description information of the object to be classified, to obtain a feature extraction result of the object to be classified, so that the feature extraction result may represent a characteristic possessed by the object to be classified.

The object description information of the object to be classified is used for describing the object to be classified; moreover, the "object description information of the object to be classified" is not limited in the embodiments of the present disclosure; for example, the object description information of the object to be classified may specifically include: video data (e.g., a live video, etc.), audio data (e.g., voice introduction data), text data (e.g., text introduction content, user comments, etc.) used for displaying the object to be classified.

In addition, the implementation of the above step 31 is not limited in the embodiments of the present disclosure; for example, the implementation of the above step 31 may be implemented by using any existing or future feature extracting method. For another example, in one possible implementation, step 31 may specifically be implemented as follows: firstly, preprocessing the object description information of the object to be classified by using some information processing techniques (e.g., natural language processing (NLP), computer vision (CV), automatic speech recognition (ASR), etc.), to obtain a preprocess result; then performing feature extraction on the preprocess result by using a deep learning algorithm, to obtain the feature extraction result of the object to be classified.

Step 32: classifying the feature extraction result of the object to be classified by using the pre-built object classification model, to obtain the object category of the object to be classified, so that the object category may represent a classification result of the object to be classified under at least one classification dimension (e.g., three dimensions such as object category, object attribute, object topic, etc.).

The object classification model is used for classifying input data of the object classification model under at least one classification dimension (e.g., three dimensions such as object category, object attribute, object topic, etc.).

In addition, the object classification model may be pre-trained by using object description information of at least one second candidate object and classification annotation information of the at least one second candidate object. The object description information of the second candidate object is used for describing the second candidate object; moreover, the object description information of the second candidate object is similar to the relevant content of the above "object description information of the object to be classified"; and for brevity, no details will be repeated here. The classification annotation information of the second candidate object is used for representing a classification situation of the second candidate object under at least one classification dimension (e.g., three dimensions such as object category, object attribute, object topic, etc.); moreover, the classification annotation information of the second candidate object is not limited in the embodiments of the present disclosure; for example, it may be implemented with the help of manual annotation.

In addition, the training process of the object classification model is not limited in the embodiments of the present disclosure; for example, the training process of the object classification model may specifically be as follows: firstly, performing a feature extraction processing on object description information of the respective second candidate objects, to obtain feature extraction results of the respective second candidate objects; and then training the object classification model by using a feature extraction result of at least one second candidate object and classification annotation information of the at least one second candidate object, so that the trained object classification model can classify the input data (e.g., a feature extraction result of a certain object) of the object classification model under at least one classification dimension.

It should be noted that the implementation of the above step of "training the object classification model by using a feature extraction result of at least one second candidate object and classification annotation information of the at least one second candidate object" is not limited in the embodiments of the present disclosure; for example, it may be implemented by using any existing or future model training method based on training data.

It should also be noted that an implementation of the above step of "performing a feature extraction processing on object description information of the respective second candidate objects, to obtain feature extraction results of the respective second candidate objects" is similar to the implementation of the above step 31, so, for brevity, no details will be repeated here.

Based on the relevant content of step 31 to step 32 above, it can be known that after acquiring the object description information of the object to be classified, firstly a feature extraction processing may be performed on the object description information to obtain the feature extraction result of the object to be classified; and then the feature extraction result is input into the pre-built object classification model, so that the object classification model may determine the object category of the object to be classified according to the feature extraction result, so that the object category may represent a classification result of the object to be classified under at least one classification dimension (e.g., three dimensions such as object category, object attribute, object topic, etc.).

It should be noted that the determination process of the above "object category of the object for reference" is similar to the determination process of the above "object category of the object to be classified"; and for brevity, no details will be repeated here. Similarly, the determination process of the above "object category of the target display object" is similar to the determination process of the above "object category of the object to be classified".

The above "recommended information set corresponding to the object for reference" may be determined according to the object category of the object for reference. For example, in the case where the object category of the object for reference includes the 1-*st* class (e.g., the retro women's clothing shown in Fig. 3), the 2-*nd* class (e.g., clothing, shoes and bags shown in Fig. 3),..., and the E-*th* class (e.g., mother and baby supplies/books shown in Fig. 3), the "recommended information set corresponding to the object for reference" may include a recommended information set under the 1-*st* class, a recommended information set under the 2-*nd* class,..., and a recommended information set under the E-*th* class. Information in the recommended information set under the e-*th* class may be used for recommending some other objects under the e-*th* class to the user. e is a positive integer, e≤E, and E is a positive integer.

In addition, the above "recommended information set" is not limited in the embodiments of the present disclosure; for example, it may specifically include account attribute information of several candidate accounts; objects to be displayed under each candidate account include a target display object; and the object category of the target display object is the same as the object category corresponding to the recommended information set. The object to be displayed refers to an object on which some operations (e.g., interactive operations such as viewing and trading) may be performed within the live room corresponding to the candidate account. The account attribute information is used for describing attributes of the candidate account (e.g., an avatar corresponding to the candidate account, a nickname corresponding to the candidate account, etc.). For ease of understanding, it will be illustrated below in conjunction with examples.

As an example, in the case where an information display page corresponding to the above candidate account is used for displaying a second live video, the candidate account may refer to a publish account of the second live video; the information display page corresponding to the candidate account may refer to a playing page of the second live video; account attribute information of the candidate account may be used for describing attributes (e.g., avatar, nickname) of the publish account of the second live video; the object to be displayed under the candidate account may refer to an object on which some operations (e.g., interactive operations such as viewing and trading) may be performed within the live room corresponding to the candidate account; a target display object under the candidate account refers to an object to be displayed supplied by the live room corresponding to the candidate account whose object category is the same as the object category corresponding to the above recommended information set.

It can be seen that in the case where the information in the above "recommended information set" is used for describing certain live rooms, there is an object to be displayed whose object category is the same as the object category corresponding to the recommended information set among the objects supplied by the live room. For example, as shown in Fig. 3, in the case where the above "recommended information set" includes the relevant content (e.g., avatar, nickname, etc.) of the first live room shown in a region 302 of Fig. 3, the relevant content (e.g., avatar, nickname, etc.) of a second live room shown in Fig. 3, ... , these live rooms may supply some commodities (e.g., short skirts, cool slip summer dress,... shown in Fig. 3) under the object category (e.g., retro women's clothing) corresponding to the recommended information set.

In addition, since the object category corresponding to the above recommended information set is the same as the object category of the above object for reference, and the object category of the above target display object is also the same as the object category corresponding to the recommended information set, the object category of the target display object is also the same as the object category of the object for reference, so that the target display object and the object for reference belong to the same category. Based on this, it can be known that the candidate account involved in the above recommended information set may supply the user with objects of the same category as the object for reference.

It should be noted that specific meaning of the above context that "the object category of the target display object is also the same as the object category of the object for reference" is not limited in the embodiments of the present disclosure, which may refer to that the two are partially the same or the two are completely the same. The so-called "being partially the same" refers to that in the case where the number of object categories of the target display object is a plural, and the number of object categories of the object for reference is also a plural, there is an intersection between the object category of the target display object and the object category of the object for reference.

In addition, an implementation of the above recommended information set is not limited in the embodiments of the present disclosure; for example, it may be implemented by using any existing or future information aggregation mode.

For another example, in order to better improve user experience, the above first object recommendation information may be implemented with help of a form of ranking list. Based on this, the embodiment of the present disclosure provides one possible implementation of the above recommended information set; in this implementation, in the case where the recommended information set includes account attribute information of several candidate accounts, the recommended information set may display the account attribute information of these candidate accounts in the form of ranking list, to obtain a ranking list similar to that shown in Fig. 3, so that the recommended information set may display the account attribute information of the candidate accounts in a certain order.

In addition, in order to better improve user experience, the embodiment of the present disclosure further provides another possible implementation of the above recommended information set; in this implementation, the recommended information set may not only include account attribute information of several candidate accounts, but also include object display information of a target display object under each candidate account. The object display information is used for describing the target display object; moreover, the object display information is not limited in the embodiments of the present disclosure; for example, the object display information may include some text data (e.g., an object name of the target display object similar to a character string "short skirt", etc.) and/or some picture data (e.g., picture data used for displaying the target display object, etc.).

Furthermore, in order to better improve user experience, the user may jump to an information display page corresponding to the candidate account, with the help of a trigger operation (e.g., a click operation) for account attribute information of a certain candidate account in the recommended information set, so that the user may browse objects to be displayed (e.g., the target display object, etc.) supplied by the candidate account on the information display page. In addition, in order to further improve user experience, the user may jump to the information display page corresponding to the candidate account, with the help of a trigger operation (e.g., a click operation) for object display information of a target display object under a certain candidate account in the recommended information set, and relevant content (e.g., price, performance, attribute, promotional activities, etc.) of the target display object is displayed on the information display page, so that the user may quickly view the relevant content of the target display object with the help of the object display information of the target display object, which is favorable for improving the user's viewing experience for objects of the same category as the above object for reference. The information display page is used for displaying content related to the candidate account; and the information display page corresponding to the candidate account may be used for displaying the objects to be displayed under the candidate account.

In addition, the above "information display page corresponding to the candidate account" is not limited in the embodiments of the present disclosure; for example, in a live streaming scenario, the information display page corresponding to the candidate account may be used for displaying relevant content (e.g., the second live video, comment information, etc.) of a live room corresponding to the candidate account. The second live video refers to video data played on the information display page corresponding to a certain candidate account (e.g., the target account).

In addition, the above acquisition process of the recommended information set are not limited in the embodiments of the present disclosure; for example, it may specifically be: determining the recommended information set corresponding to the object for reference according to the object category of the object for reference, so that the object category corresponding to the "recommended information set corresponding to the object for reference" is the same as the object category of the object for reference.

Furthermore, an implementation of the above step of "determining the recommended information set corresponding to the object for reference according to the object category of the object for reference" is not limited in the embodiments of the present disclosure; for example, it may specifically be as follows: searching for a candidate information set corresponding to the object category of the above object for reference from a pre-built mapping relationship, and determining the candidate information set corresponding to the object category of the above object for reference as the recommended information set. The mapping relationship is used for recording one-to-one correspondence between different object categories and different candidate information sets. It should be noted that an implementation of the candidate information set is similar to the implementation of the above recommended information set.

In addition, the above candidate information set may be pre-built; moreover, in the case where the candidate information set is displayed in the form of ranking list, in order to better improve accuracy of ranking of information recorded in the candidate information set on the ranking list, the candidate information set may be built and updated in real time according to object related information (e.g., an interactive operation such as trading, etc.) corresponding to some accounts involved in the candidate information set, so that the candidate information set may better improve real time performance of ranking of these accounts on the ranking list.

In addition, the building process of the above candidate information set is not limited in the embodiments of the present disclosure; for ease of understanding, it will be illustrated below by taking the building process of the above "recommended information set corresponding to the object for reference" as an example.

As an example, in the case where the object category of the above "recommended information set corresponding to the object for reference" is implemented in the form of ranking list, and the "recommended information set corresponding to the object for reference" is a target category, the building process of the "recommended information set corresponding to the object for reference" may specifically include step 41 to step 44 below.

Step 41: determining at least one account to be used from the at least one candidate account, according to object supply information of the at least one candidate account, so that the object supply information of the account to be used is used for representing that an object category of a fourth target object under the account to be used is the same as the object category of the above "recommended information set corresponding to the object for reference".

The above "at least one alternative account" refers to an account (e.g., a live account) required for building an information recommendation ranking list; moreover, the "at least one alternative account" is not limited in the embodiments of the present disclosure; for example, the at least one alternative account may be a publish account for all live videos stored in one or more video applications.

The object supply information is used for describing the relevant content of an object supplied by an account; moreover, the object supply information is not limited in the embodiments of the present disclosure; for example, in the case where the account (e.g., the alternative account or the account to be used above) is used for supplying at least one third candidate object, the object supply information of the live video may include object categories of these third candidate objects. The third candidate object refers to an object on which some operations (e.g., interactive operations such as viewing and trading, etc.) may be performed within the live room corresponding to the account; the third candidate object is similar to the above first candidate object; and for brevity, no details will be repeated here.

The above "at least one account to be used" is used for supplying other objects under the target category except the above object for reference.

The above "fourth target object" refers to an object under the target category supplied by the account to be used. It can be seen that in the case where a display page of the account to be used may be used for displaying M third candidate objects, it may be judged whether there is a target category among at least one object category of the *m-th* third candidate object displayed on the display page, if there is a target category, it may be determined that the *m-th* third candidate object belongs to the same category as the above object for reference, so, the *m-th* third candidate object may be regarded as the fourth target object corresponding to the account to be used. m is a positive integer, m≤M, and M is a positive integer.

Based on the relevant content of the above step 41, it can be known that after determining that there is a target category among the object categories of the above object for reference, it may be determined that an information recommendation ranking list corresponding to the target category needs to be built by using accounts to be used corresponding to other objects under the target category except the object for reference, so, firstly all candidate accounts are aggregated by using the target category to obtain at least one account to be used, so that the respective accounts to be used may each supply at least one object under the target category, so as to facilitate subsequently building the information recommendation ranking list corresponding to the target category by using these accounts to be used.

Step 42: determining recommendation representation data of the at least one account to be used according to object interaction information of the at least one account to be used.

The object interaction information is used for describing an interaction situation (e.g., an operation situation and/or a trading situation, etc.) triggered for an object under the account to be used; moreover, the object interaction information are not limited in the embodiments of the present disclosure; for example, the object interaction information may include real-time sales volume of objects. The real-time sales volume of objects refers to the quantity of real-time sales of all objects under the account to be used.

The above "recommendation representation data of the account to be used" is used for describing a likelihood that the account to be used is recommended to the user; moreover, the larger the recommendation representation data of the account to be used, the greater the likelihood that the account to be used is recommended to the user; the smaller the recommendation representation data of the account to be used, the less the likelihood that the account to be used is recommended to the user.

In addition, a determination process of the above "recommendation representation data of the account to be used" is not limited in the embodiments of the present disclosure; for example, in the case where the above object interaction information includes the real-time sales volume of objects, the determination process of the "recommendation representation data of the account to be used" may specifically be as follows: determining the recommendation representation data of the account to be used according to the real-time sales volume of objects of the account to be used, so that the recommendation representation data of the account to be used is proportional to the real-time sales volume of objects of the account to be used.

Based on the relevant content of the above step 42, it can be known that after acquiring the at least one account to be used under the above target category, the recommendation representation data of the respective accounts to be used may be determined according to the object interaction information of the respective accounts to be used (e.g., the total sales of all objects), so that the recommendation representation data of the respective accounts to be used may represent a likelihood that the respective accounts to be used are recommended to the user.

Step 43: determining at least one account to be displayed that meets a preset recommendation condition from the at least one account to be used according to the recommendation representation data of the at least one account to be used, in which the account to be displayed refers to an account to be used that meets the preset recommendation condition.

The preset recommendation condition may be preset, for example, it may specifically be T accounts to be used whose recommendation representation data is the largest. T is a positive integer.

Based on the relevant content of the above-described step 43, it can be known that with respect to the at least one account to be used under the above target category, after acquiring the recommendation representation data of the respective accounts to be used, these accounts to be used may be ranked according to the recommendation representation data of these accounts to be used, to obtain a ranking result, so that the ranking result may represent a ranking state of these accounts to be used when ranked in a descending order of the recommendation representation data; then, the top T accounts to be used in the ranking result are all regarded as the accounts to be displayed (i.e., accounts that need information display on the ranking list), so that subsequently the ranking list can be built based on these accounts to be displayed.

Step 44: building a recommended information set according to relevant information of the at least one account to be displayed (e.g., account attribute information and/or object display information of a target display object under the account to be displayed), as well as recommendation representation data of the at least one account to be displayed, so that the recommended information set may display the relevant information of these accounts to be displayed in the form of a ranking list.

In the embodiment of the present disclosure, after acquiring the at least one account to be displayed and the recommendation representation data of the at least one account to be displayed, the relevant information of these accounts to be displayed may be ranked in a descending order of the recommendation representation data according to the recommendation representation data of these accounts to be displayed, to obtain a ranking result; and then, the recommended information set corresponding to the target category is built according to the ranking result, so that the recommended information set may recommend these accounts to be displayed to the user according to the ranking result.

Based on the relevant content of step 41 to step 44 above, it can be known that after determining that there is a target category among the object categories of the above objects for reference, firstly at least one account to be used under the target category may be selected from a large number of candidate accounts by using the target category; and then, the at least one account to be used are ranked according to the object interaction information of the at least one account to be used, to obtain the recommended information set corresponding to the target category, so that the recommended information set may represent object recommendation information under the target category.

It should be noted that the building process of the above "candidate information set" is similar to the building process shown in step 41 to step 44 above; and for brevity, no details will be repeated here.

Based on the relevant content of the above "recommended information set", it can be known that with respect to a client used by a viewer of a certain video data, in the case where the client is displaying a video playing page, the client may firstly acquire the object for reference (i.e., the object the user is interested in) after receiving a trigger operation (e.g., a click operation) for a target control on the video playing page, and then acquire the recommended information set corresponding to the object for reference according to the object category of the object for reference, so that the object category corresponding to the recommended information set is the same as the object category of the object for reference, so the information in the recommended information set may describe the relevant content (e.g., account attribute information, object display information, etc.) of some objects of the same category as the object for reference, to facilitate the viewer to subsequently view these objects of the same category with the help of the information in the recommended information set.

The above "information recommendation page" is used for displaying the recommended information set corresponding to the above object for reference; moreover, the information recommendation page is not limited in the embodiments of the present disclosure, for example, the information recommendation page may be a dropdown page 301 shown in Fig. 3.

In addition, a display mode of the information recommendation page is not limited in the embodiments of the present disclosure, for example, the display mode of the information recommendation page may be implemented by using any existing or future page display mode. For another example, in order to better improve user experience, the information recommendation page may be displayed directly on the above video playing page according to a preset display mode, so as to realize viewing the information recommendation page without leaving the video playing page. The preset display mode may be preset, for example, it may be a dropdown page (e.g., the page 301 displayed in the dropdown page mode on the page 300 in Fig. 3), or it may also be implemented in other page display mode on the video playing page.

In addition, an information display mode of the information recommendation page is not limited in the embodiments of the present disclosure, for example, it may be displayed by using any existing or future object recommendation mode. For another example, in the case where the above object for reference corresponds to a plurality of recommended information sets, after receiving a trigger operation for the target control on the video playing page, the client displays the information recommendation page, and directly displays a first information set (e.g., an information set under an overall ranking list tag shown in Fig. 3) among these recommended information sets and some category tags (e.g., a retro women's clothing tag, a clothing/shoe/bag tag, etc. shown in Fig. 3) on the information recommendation page, so as to subsequently display a recommended information set (e.g., an information set under the retro women's clothing tag shown in Fig. 3) corresponding to the category tag on the information recommendation page, in response to a trigger operation (e.g., a click operation) for a certain category tag (e.g., the retro women's clothing tag shown in Fig. 3) among these category tags. In this way, the objective of supplying the user with objects of a category different from that of the object for reference can be realized, so as to better meet information viewing needs of the user, and thus is favorable for improving user experience.

Based on the relevant content of S101 to S102 as described above, it can be known that with respect to a client used by a viewer of a certain video data, when displaying a video playing page, the client may display some first candidate objects to the viewer; and after receiving a trigger operation for the target control on the video playing page, the client may display an information recommendation page and display a recommended information set corresponding to the object for reference among these first candidate objects on the information recommendation page. The recommended information set includes account attribute information of several candidate accounts, and objects to be displayed under each candidate account include a target display object; an object category of the target display object is the same as an object category corresponding to the recommended information set, and the object category corresponding to the recommended information set is also the same as a category of the object for reference, so that these candidate accounts may supply the viewer with some other objects (e.g., objects of the same category) related to the object for reference.

It can be seen that the above object for reference is determined according to the follow state representation information of the at least one first candidate object corresponding to the video playing page, so that the object for reference may represent an object the viewer is interested in, and thus it may be inferred that the viewer may be interested in other objects related to the object for reference (e.g., objects of the same category as the object for reference), therefore, after the recommended information set corresponding to the object for reference is recommended to the viewer, the viewer may view other objects related to the object for reference with the help of the recommended information set, which may better meet object viewing experience for the viewer and is favorable for improving user experience.

In fact, in order to better improve user experience, the embodiment of the present disclosure further provides one possible implementation of the above target control; in this implementation, the target control displays prompt information (e.g., such information as the *"9-th* place on the retro women's clothing list" shown in Fig. 2), so that the prompt information may prompt the viewer of the above video playing page that the viewer can view a ranking list corresponding to objects the viewer is interested in.

In addition, in order to better improve user experience, the prompt information displayed on the target control will change with the change of the object the user is interested in. Based on this, the embodiment of the present disclosure further provides another possible implementation of the above display method; in this implementation, in the case where the display method at least includes the steps S101 to S102 above, the display method further includes the step S103 below. Execution time of the step S103 is later than execution time of the step S101; moreover, the execution time of S103 is not limited in the embodiments of the present disclosure.

S103: updating ranking position description information of the account corresponding to the above video playing page, and updating the prompt information on the target control by using the ranking position description information, after updating the above object for reference by using the follow state representation information of the above at least one first candidate object, in which the ranking position description information is used for describing a ranking position of the account attribute information of the account corresponding to the video playing page in the above "recommended information set corresponding to the object for reference".

In addition, the above ranking position description information is not limited in the embodiments of the present disclosure, for example, the ranking position description information may be such information as the *"9-th* place on the retro women's clothing list" shown in Fig. 2.

In addition, a determination process of the above ranking position description information is not limited in the embodiments of the present disclosure; for example, in the case where the above object for reference corresponds to one recommended information set, the ranking position of the account attribute information of the account corresponding to the video playing page in the above "recommended information set corresponding to the object for reference" may be directly determined as the ranking position description information. For another example, in the case where the above object for reference corresponds to a plurality of recommended information sets, the ranking position description information may be determined from the ranking position of the account attribute information of the account corresponding to the video playing page in these recommended information sets according to a preset rule (e.g. different object categories correspond to different priorities), so that the ranking position description information may describe the ranking position of the account corresponding to the video playing page in a certain recommended information set.

Furthermore, update timing of the above object for reference are not limited in the embodiments of the present disclosure; for example, it may be updated once every time interval. For another example, an update process of the object for reference may be executed once immediately after one operation is triggered for a certain object on the above video playing page.

Based on the relevant content of S103 above, it can be known that with respect to a client used by a viewer of a certain video data, when the client is displaying a video playing page, after the update process for the above object for reference is completed, the client may update the recommended information set corresponding to the object for reference with the help of the object category of the object for reference, and further update the display content of the target control based on the ranking position of the account corresponding to the video playing page in the recommended information set. This may ensure real-time performance of the display content of the target control, which is favorable for improving user experience.

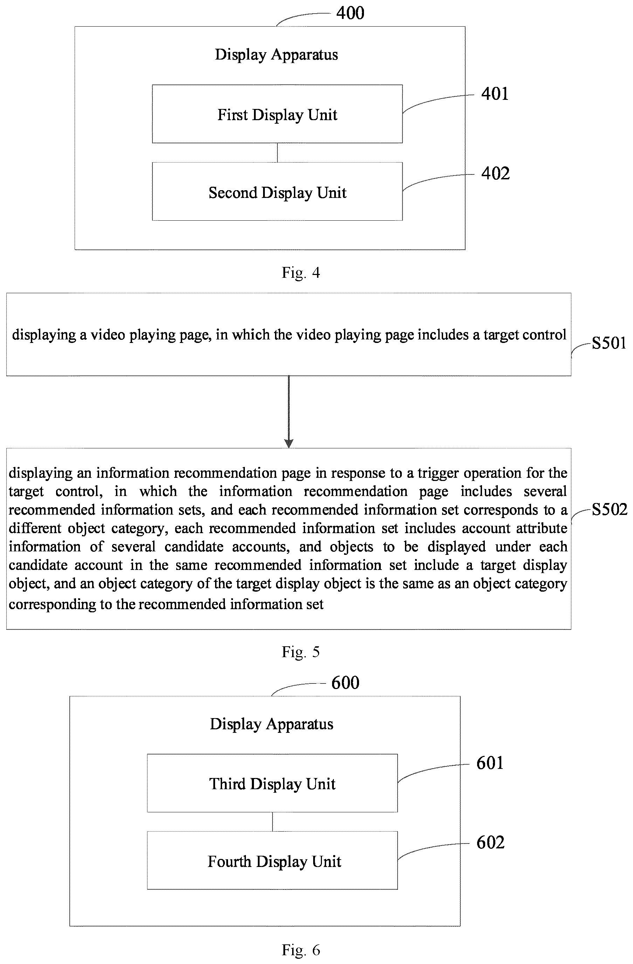

Based on the display method provided by the embodiment of the present disclosure, an embodiment of the present disclosure further provides a display apparatus, which will be explained and illustrated below in conjunction with Fig. 4. Fig. 4 is a structural schematic diagram of the display apparatus provided by the embodiment of the present disclosure. It should be noted that the relevant content of the above display method may be referred to for technical details of the display apparatus provided by the embodiment of the present disclosure.

As shown in Fig. 4, the display apparatus 400 provided by the embodiment of the present disclosure includes:

a first display unit 401, configured to display a video playing page;
a second display unit 402, configured to display an information recommendation page, in response to a trigger operation for a target control on the video playing page; a recommended information set corresponding to an object for reference is displayed on the information recommendation page; the object for reference is determined according to follow state representation information of at least one first candidate object corresponding to the video playing page; the recommended information set comprises account attribute information of several candidate accounts, objects to be displayed under each of the candidate accounts comprises a target display object, an object category of the target display object is same as an object category corresponding to the recommended information set; and the object category corresponding to the recommended information set is same as an object category of the object for reference.

In one possible embodiment, the follow state representation information comprises historical operation behavior information and video explanation information;

if historical operation behavior information of a first target object among the at least one first candidate object meets a first preset condition, then the object for reference is determined according to the first target object;
if none of the historical operation behavior information of the respective first candidate objects meets the first preset condition, then the object for reference is determined according to video explanation information of the at least one first candidate object.

In one possible embodiment, if none of the historical operation behavior information of the respective first candidate objects meets the first preset condition, and video explanation information of a second target object among the at least one first candidate object meets a second preset condition, then the object for reference is determined according to the second target object.

In one possible embodiment, the historical operation behavior information comprises a click count; the first preset condition is a click count of the first target object being greater than a preset count threshold.

In one possible embodiment, the second preset condition comprises: the video explanation information of the second target object being that the second target object is in a state of being explained on the video playing page;

or,
the second preset condition comprises: the video explanation information of the second target object being that the second target object is in a state of having been explained on the video playing page, and an explanation completion moment of the second target object is later than an explanation completion moment of other object in the state of having been explained on the video playing page.

In one possible embodiment, the follow state representation information comprises historical operation behavior information;

the display apparatus further comprises:
an information updating unit, configured to, update historical operation behavior information of a third target object, in response to a trigger operation for the third target object among the at least one first candidate object corresponding to the video playing page.

In one possible embodiment, the recommended information set further comprises object display information of the target display object under each of the candidate account.

In one possible embodiment, an object to be classified is the object for reference or the target display object;

an object category of the object to be classified is determined according to object description information of the object to be classified and a pre-built object classification model; and the object classification model is used for classifying the object description information of the object to be classified.

In one possible embodiment, the video playing page is used for displaying a first live video; and/or, an information display page corresponding to the candidate account is used for displaying a second live video.

Based on the relevant content of the above-described display apparatus 400, it can be known that with respect to the display apparatus 400 provided by the embodiment of the present disclosure, when displaying the video playing page, the display apparatus 400 may display some first candidate objects to the viewer; and after receiving the trigger operation for the target control on the video playing page, the display apparatus 400 displays the information recommendation page and displays the recommended information set corresponding to the object for reference on the information recommendation page. The recommended information set includes account attribute information of several candidate accounts, and objects to be displayed under each candidate account include a target display object; an object category of the target display object is the same as an object category corresponding to the recommended information set, and the object category corresponding to the recommended information set is also the same as a category of the object for reference, so that these candidate accounts may supply the viewer with some other objects related to (e.g., objects of the same category) the object for reference.

It can be seen that the object for reference is determined according to the follow state representation information of the at least one first candidate object corresponding to the video playing page, so that the object for reference may represent an object the viewer is interested in; and thus it may be inferred that the viewer may be interested in other objects related to (e.g., objects of the same category as) the object for reference; so, after the recommended information set corresponding to the object for reference is recommended to the viewer, the viewer may view other objects related to the object for reference with the help of the recommended information set, which may better meet object viewing experience for the viewer and is favorable for improving user experience.

In addition, it is also found through study that with respect to the viewer of the live video, in some cases, the viewer may not only view objects supplied by the live room, but may also want to view objects other than the objects supplied by the live room. However, in some related solutions, the viewer may firstly leave the current live video and then search for and enter other live videos through a series of operations, so as to continue to view the objects displayed by these live videos subsequently, resulting in complicated viewing operations for other objects, and a poor object viewing experience for the viewer.

Based on the above-described findings, embodiments of the present disclosure provide a display method; and the method includes the followings: with respect to a client used by a viewer of a certain piece of video data, when displaying a video playing page, the client may display an information recommendation page, after receiving a trigger operation (e.g., a click operation) for a target control on the video playing page. The information recommendation page includes several recommended information sets, and each recommended information set corresponds to a different object category; each recommended information set includes account attribute information of several candidate accounts; objects to be displayed under each candidate account in the same recommended information set include a target display object; and an object category of the target display object is the same as an object category corresponding to the recommended information set.

It can be seen that the above information recommendation page includes several recommended information sets, and each recommended information set corresponds to a different object category, so that the information recommendation page may supply the user with recommended information sets under some object categories, and the user may view recommended information sets under different object categories from the information recommendation page, which may better meet information viewing needs of the user and improve user experience.

In order to better understand the technical solution provided by the present disclosure, the display method provided by the present disclosure will be firstly illustrated in conjunction with some accompanying drawings.

As shown in Fig. 1, the display method provided by the embodiment of the present disclosure includes steps S501 to S502 below.

S501: displaying a video playing page, in which the video playing page includes a target control.

The video playing page refers to a playback region of one piece of vide-o data. That is, one piece of video data may occupy the whole region on the video playing page for display. In addition, the video playing page are not limited in the embodiments of the present disclosure, for example, the video playing page may be a live video page (e.g., a live video page 200 shown in Fig. 2) or a short video page. It can be seen that in one possible implementation, the video playing page may be used for displaying a first live video (e.g., a live video displayed within the page 200 in Fig. 2, etc.). The first live video refers to a live video played on the video playing page.

In addition, the video playing page may be used for displaying and processing at least one first candidate object corresponding to the video playing page. The first candidate object refers to an object on which some operations (e.g., interactive operations such as viewing and trading) may be performed within the live room represented by the above video playing page. That is, with respect to the live room represented by the video playing page, the viewer of the live room may execute some interactive operations (e.g., interactive operations such as viewing and trading) on the first candidate object within the live room.

In addition, the first candidate object are not limited in the embodiments of the present disclosure; for example, in the case where the above video playing page is a live video page (e.g., the live video page 200 shown in Fig. 2), the first candidate object may be any commodity explained by the live video on the above video playing page, or may also be any trailer commodity displayed through certain operations (e.g., through clicking on a control 202 shown in Fig. 2), or may also be any storefront commodity displayed through certain operations (e.g., through clicking on a certain control).

It should be noted that the above trailer commodity are not limited in the embodiments of the present disclosure; for example, the trailer commodity may at least include two parts of commodities: a first part of commodity may be a commodity being explained, and a second part of commodity may be a commodity not being explained. In addition, the above storefront commodity are not limited in the embodiments of the present disclosure; for example, the storefront commodity may refer to a commodity displayed on a storefront display page corresponding to the above live video page. In addition, association correspondence between the trailer commodity and the storefront commodity are not limited in the embodiments of the present disclosure; for example, there may be or not be an intersection between the trailer commodity and the storefront commodity.

Further, there is a target control deployed on the above video playing page. The target control is used for triggering the information recommendation process; moreover, the target control is not limited in the embodiments of the present disclosure; for example, the target control may be the control 201 shown in Fig. 2.

Based on the relevant content of S501 above, it can be known that with respect to a client used by a viewer of a certain piece of video data, when displaying a video playing page, the client may display some first candidate objects to the viewer, so that the viewer may perform an interactive operation such as viewing (or trading) on one or more objects among these first candidate objects on the video playing page; and the client also displays a target control (e.g., the control 201 shown in Fig. 2) on the client, so that the viewer can view other objects in addition to these first candidate objects (e.g., other objects under the retro women's clothing shown in Fig. 3) with the help of the target control.

S502: displaying an information recommendation page in response to a trigger operation for the target control, in which the information recommendation page includes several recommended information sets, and each recommended information set corresponds to a different object category, each recommended information set includes account attribute information of several candidate accounts, and objects to be displayed under each candidate account in the same recommended information set include a target display object, and an object category of the target display object is the same as an object category corresponding to the recommended information set.

An implementation of the above "trigger operation for the target control" are not limited in the embodiments of the present disclosure; for example, it may be a click operation.

The information recommendation page is used for displaying some recommended information (e.g., some recommended information under an overall ranking list shown in Fig. 3, some recommended information under a category of retro women's clothing, and some recommended information under a category of clothing, shoes and bags).

In addition, a display mode of the information recommendation page is not limited in the embodiments of the present disclosure, for example, it may be implemented by using any existing or future page display mode. For another example, in order to better improve user experience, the information recommendation page may be displayed directly on the above video playing page according to a preset display mode, so as to view the information recommendation page without leaving the video playing page. Wherein the preset display mode may be preset, for example, it may be a dropdown page (e.g., the page 301 displayed in the dropdown page mode on the page 300 in Fig. 3).

In addition, the information recommendation page may include several recommended information sets, and each recommended information set corresponds to a different object category. That is, the information recommendation page may include recommended information sets corresponding to a plurality of object categories. For example, in the cas the information recommendation page is the page 300 shown in Fig. 3, the information recommendation page may include a recommended information set corresponding to the overall ranking list, a recommended information set corresponding to the category of retro women's clothing, a recommended information set corresponding to the category of clothing, shoes and bags, a recommended information set corresponding to the category of mother and baby supplies/books,...

The above "recommended information set" refers to an aggregation situation of some recommended information; moreover, the recommended information set is not limited in the embodiments of the present disclosure; for example, each recommended information set may include account attribute information of several candidate accounts; objects to be displayed under each candidate account in the same recommended information set include a target display object; and an object category of the target display object is the same as an object category corresponding to the recommended information set. The object to be displayed refers to an object on which some operations (e.g., interactive operations such as viewing and trading) may be performed within a live room corresponding to the candidate account. The account attribute information is used for describing attributes (e.g., an avatar corresponding to the candidate account, a nickname corresponding to the candidate account, etc.) of the candidate account.

It should be noted that specific meaning of the above context that "an object category of the target display object is the same as an object category corresponding to the recommended information set" is not limited in the embodiments of the present disclosure; for example, it may specifically refer to that the object category of the target display object and the object category corresponding to the recommended information set are partially the same or completely the same. The so-called "being partially the same" refers to that in the case where the number of object categories of the above target display object is a plural, if the object category corresponding to the recommended information set is the same as a certain object category of the target display object, then a conclusion can be drawn that "the object category of the target display object is the same as the object category corresponding to the recommended information set".

In order to facilitate understanding content of the above-described two paragraphs, it will be illustrated below in conjunction with an example.

As an example, with respect to the recommended information set corresponding to the target category (e.g., the category of retro women's clothing as shown in Fig. 3), the recommended information set may include account attribute information of at least one candidate account (e.g., account attribute information of an account corresponding to the first live room, account attribute information of an account corresponding to the second live room, ... as shown in Fig. 3); moreover, objects to be displayed under each candidate account in the recommended information set includes a target display object (e.g., short skirts, cool slip summer dress, ... ad shown in Fig. 3) belonging to the target category. The target category refers to any object category, for example, the target category may be the category of retro women's clothing shown in Fig. 3.

It can be seen that when the information recorded in the above "recommended information set" is used for describing certain live rooms, there is an object whose object category is the same as the object category corresponding to the recommended information set among the objects supplied by the live room. For example, as shown in Fig. 3, in the case where the above "recommended information set" includes relevant content (e.g., avatar, nickname, etc.) of the first live room shown in Fig. 3, relevant content (e.g., avatar, nickname, etc.) of the second live room, ..., these live rooms may supply some commodities (e.g., short skirts, cool slip summer dress, ... as shown in Fig. 3) under the object category (e.g., the category of retro women's clothing) corresponding to the recommended information set.

In addition, an implementation of the above account attribute information is not limited in the embodiments of the present disclosure; for example, in one possible implementation, with respect to a certain candidate account, account attribute information of the candidate account may include at least one of an identifier icon corresponding to the candidate account and identifier text corresponding to the candidate account. The identifier icon is used for marking the candidate account with the help of picture data; moreover, the identifier icon is not limited in the embodiments of the present disclosure; for example, the identifier icon may be implemented similar to the "avatar of the first live room" shown in the region 302 of Fig. 3. The identifier text is used for marking the candidate account with the help of text data; moreover, the identifier text is not limited in the embodiments of the present disclosure; for example, the identifier text may be implemented by using a nickname similar to the "nickname of the first live room" shown in the region 302 of Fig. 3.

In fact, in order to better improve user experience, the above account attribute information may not only be used for displaying the relevant attributes of the above candidate account to the user, but also trigger a display process for the information display page of the candidate account. Based on this, the embodiment of the present disclosure provides one possible implementation of the above display method; and in this implementation, the display method may further include a step 51 below. Execution time of the step 51 is later than execution time of the step S502 above.

Step 51: displaying an information display page corresponding to a target account, in response to a trigger operation for the account attribute information of the target account, upon the information recommendation page displaying the account attribute information of the target account among the several candidate accounts.

The target account refers to a candidate account selected by the user that is currently being displayed on the above information recommendation page (i.e., a certain operation is triggered by the user for the account attribute information of the target account). For example, in the case where the above information recommendation page is the page 301 shown in Fig. 3, and these candidate accounts include the account corresponding to the first live room, the account corresponding to the second live room, ... , the client may determine that the account corresponding to the first live room is selected by the user after receiving a trigger operation (e.g., a click operation) on the region 302, so, the information display page corresponding to the account corresponding to the first live room may be displayed, so that the user may learn relevant content of the first live room from the information display page.

In addition, the above "trigger operation for the account attribute information of the target account" is not limited in the embodiments of the present disclosure; for example, the trigger operation for the account attribute information of the target account may be a click operation within a display region for the account attribute information of the target account.

The above "information display page corresponding to the target account" is used for displaying content related to the target account; and the information display page corresponding to the target account may be used for displaying objects to be displayed under the target account. In addition, the "information display page corresponding to the target account" are not limited in the embodiments of the present disclosure; for example, in a live streaming scenario, the information display page corresponding to the target account may be used for displaying relevant content (e.g., a second live video, comment information, etc.) of a live room corresponding to the target account. Wherein the second live video refers to video data played by an information display page corresponding to a certain candidate account (e.g., the target account).

Based on the relevant content of step 51 above, it can be known that with respect to a client used by a viewer of a certain piece of video data, when the client is displaying an information recommendation page (e.g., the page 301 shown in Fig. 3) and displaying account attribute information of some candidate accounts (e.g., the account corresponding to the first live room, the account corresponding to the second live room,...etc. shown in Fig. 3) on the information recommendation page, the client displays the information display page (e.g., the live video playing page of the first live room shown in Fig. 3, etc.) corresponding to the target account after receiving a trigger operation (e.g., a click operation triggered within the region 302 in Fig. 3) for the account attribute information of the target account among these candidate accounts, so that the viewer may view information related to the target account (e.g., live room information, etc.) from the information display page, and thus the viewer may directly enter other live room to view some object information with the help of the information recommendation page, which can effectively improve information viewing experience for the viewer.

In fact, with respect to any recommended information set, the recommended information set may not only display account attribute information of some candidate accounts, but also display objects belonging to the target category under these candidate accounts. Based on this, the embodiment of the present disclosure further provides one possible implementation of the recommended information set; in this implementation, in the case where the recommended information set includes account attribute information of several candidate accounts, and objects to be displayed under each candidate account in the recommended information set include a target display object, the recommended information set may further include object display information of the target display objects under these candidate accounts. The object display information is used for describing the target display object.

In addition, the object display information of the above target display object is not limited in the embodiments of the present disclosure; for example, the object display information of the above target display object may include at least one of text description information of the target display object and picture description information of the target display object. The text description information is used for describing the target display object with the help of some characters; moreover, the text description information is not limited in the embodiments of the present disclosure; for example, the text description information may include an object name (e.g., similar to a character string such as "short skirt" shown in the region 302 of Fig. 3) of the target display object. The picture description information is used for describing the target display object with the help of picture data; moreover, the picture description information is not limited in the embodiments of the present disclosure; for example, the picture description information may include picture data (e.g., a commodity picture) corresponding to the target display object.

In fact, in order to better improve user experience, the object display information of the above target display object may not only display content (e.g., object name, object picture, etc.) related to the target display object to the user, but also trigger an information display process for the target display object. Based on this, the embodiment of the present disclosure further provides another possible implementation of the above display method; in this implementation, the display method may further include a step 52 below. Execution time of the step 52 is later than execution time of the step S502 above.

Step 52: displaying the information display page corresponding to the target account, and displaying an information display interface corresponding to the target display object under the target account on the information display page corresponding to the target account, in response to a trigger operation for the object display information of the target display object under the target account, upon the information recommendation page displaying the object display information of the target display object under the target account among the several candidate accounts, in which the information display interface is used for displaying the relevant content (e.g., object introduction content, object interactive operation, object discount situation, etc.) of the target display object under the target account.

It should be noted that the above text "in response to a trigger operation for the object display information of the target display object under the target account" is not limited in the embodiments of the present disclosure, for example, the trigger operation may be a click operation. In addition, an implementation of the above "displaying an information display interface corresponding to the target display object under the target account on the information display page corresponding to the target account" is not limited in the embodiments of the present disclosure, for example, it may be implemented by using any existing or future interface display method (e.g., a method of displaying an interface corresponding to a certain commodity on a live page).

Based on the relevant content of step 52 above, it can be known that with respect to a client used by a viewer of a certain piece of video data, when the client is displaying an information recommendation page (e.g., the page 301 shown in Fig. 3) and displaying object display information of a target display object under some candidate accounts on the information recommendation page, the client will not only display an information display page corresponding to the target account, but also directly display an information display interface corresponding to the target display object under the target account on the information display page after receiving a trigger operation (e.g., a click operation) for the object display information of a target display object under a target account among these candidate accounts, so as to directly locate and display relevant content of the target display object at the moment of opening the information display page, so that the viewer can quickly view the relevant content of the target display object from the information display page, which is favorable for improving object viewing efficiency of the viewer, and thus is favorable for improving information viewing experience for the viewer.

In addition, since the above information recommendation page may include recommended information sets corresponding to several object categories, a display process of the recommended information sets corresponding to these object categories may be controlled with the help of category tags corresponding to these object categories (e.g., the overall ranking list tag shown in a region 303, the retro women's clothing tag shown in a region 304, the clothing/shoe/bag tag shown in a region 305, and the mother and baby supply/book tag shown in a region 306 in Fig. 3), so as to better improve an information display effect of the information recommendation page. Based on this, the embodiment of the present disclosure further provides one possible implementation of the above information recommendation page; in this implementation, the information recommendation page may not only include a recommended information set corresponding to several object categories, but also include category tags corresponding to these object categories, so that the object category corresponding to the category tag can be displayed on the category tag; in this way, a one-to-one correspondence relationship between these category tags and these recommended information sets may be built with the help of these object categories as an intermediate media, and the object category corresponding to the recommended information set can be displayed on the category tag having a correspondence relationship with the recommended information set, so that subsequently display of these recommended information sets can be controlled with the help of a control process for these category tags.

Based on this, the embodiment of the present disclosure further provides another possible implementation of the above display method; in this implementation, in the case where the above information recommendation page includes several recommended information sets and several category tags, and in the case where there is one-to-one correspondence relationship between these category tags and these recommended information sets, the display method may further include a step 53 below. Execution time of the step 53 is later than execution time of the step S502 above.

Step 53: switching a recommended information set displayed on the information recommendation page from a recommended information set corresponding to a first tag to a recommended information set corresponding to a second tag (e.g., displaying the recommended information set corresponding to the second tag, and canceling display of the recommended information set corresponding to the first tag, on the information recommendation page), in response to a trigger operation for the second tag among the several category tags, if the recommended information set being currently displayed on the information recommendation page is the recommended information set corresponding to the first tag among the several category tags (i.e., in the case where the recommended information set corresponding to the first tag among the several category tags is being displayed on the information recommendation page).

The first tag refers to a category tag corresponding to the recommended information set being displayed on the information recommendation page. For example, in the case where the information recommendation page is the page 301 shown in Fig. 3, the first tag may refer to the category tag of retro women's clothing shown in the region 304 of Fig. 3.

The second tag refers to a category tag selected by the user. For example, in the case where the information recommendation page is the page 301 shown in Fig. 3, after the client receives a trigger operation for the category tag shown in the region 305 on the information recommendation page, the category tag of clothing/shoe/bag shown in the region 305 may be regarded as the second tag.

Based on the relevant content of the step 53 above, it can be known that with respect to a client used by a viewer of a certain piece of video data, when the client is displaying an information recommendation page (e.g., the page 301 shown in Fig. 3) and displaying the recommended information set corresponding to the first tag (e.g., the category tag of retro women's clothing shown in the region 304 of Fig. 3) among several category tags on the information recommendation page, the client receives a trigger operation (e.g., a click operation) for the second tag among these category tags, and switches the recommended information set displayed on the information recommendation page from the recommended information set corresponding to the first tag into the recommended information set corresponding to the second tag (e.g., the category tag of clothing, shoes and bags shown in the region 205 in Fig. 3), which can achieve an objective of switching from one recommended information set to another recommended information set on the information recommendation page, so that the display process of the recommended information sets corresponding to these category tags can be controlled with the help of these category tags, which is further favorable for improving flexibility of viewing recommended information under different object categories by the viewer, and thus is favorable for improving information viewing experience for the viewer.

In addition, the above determination process of several recommended information sets on the above information recommendation page are not limited in the embodiments of the present disclosure; for example, it may be preset according to application scenarios.

Actually, it is found through study that with respect to the viewer of the above video playing page, when the viewer is interested in a certain object displayed on the video playing page, the viewer may want to see objects of the same category (e.g., other objects under the same object category, other objects under the same object topic, other objects under the same object attribute, etc.) as the object. The object category is used for describing a class affiliation of an object (e.g., multi-level classes such as clothing/spring clothing/tops/...etc.). The object attribute is used for describing properties possessed by an object (e.g., shape, color, odor, material, etc.). The object topic is used for describing a topic affiliation of an object (e.g., a topic such as retro women's clothing, etc.).

Based on this, in order to better improve user experience, the embodiment of the present disclosure further provides one possible implementation of the determination process of several recommended information sets on the above information recommendation page; in this implementation, if there is a target reference object that meets a preset condition among the at least one first candidate object corresponding to the above video playing page, these recommended information sets are determined according to an object category of the target reference object, so that the object categories corresponding to these recommended information sets are the same as the object category of the target reference object, and these recommended information sets are used for recommending other objects belonging to the same category as the target reference object. For ease of understanding, it will be illustrated below in conjunction with an example.

As an example, in the case where the object category of the above target reference object includes category 1, category 2, category 3,..., and category P, a recommended information set corresponding to category 1, a recommended information set corresponding to category 2, a recommended information set corresponding to category 3,..., and a recommended information set corresponding to category P may be determined as the several recommended information sets deployed on the above information recommendation page, so that subsequently the user can view objects of the same category under the category 1, objects of the same category under the category 2, ...as the target reference object with the help of the information recommendation page. P is a positive integer.

The above "target reference object" refers to a first candidate object that meets the preset condition among the at least one first candidate object corresponding to the above video playing page, so that the target reference object may represent the object the user is interested in. The preset condition may be preset. For ease of understanding, it will be illustrated below with two examples.

Example 1: it is further found through study that with respect to the viewer of the above video playing page, if the viewer is interested in a certain object displayed on the video playing page, then the viewer may trigger some operations on the object (e.g., operations such as clicking, adding to favorites, adding to a shopping cart, searching, viewing, etc.). Based on this, the embodiment of the present disclosure further provides a possible implementation of the above preset condition, which may specifically include: historical operation information of the target reference object meeting a preset operation condition. The historical operation behavior information is used for representing operations (e.g., operations such as clicking, adding to favorites, adding to a shopping cart, searching, viewing, etc.) the user has triggered for the target reference object on the above video playing page. The preset operation condition may be preset, for example, the preset operation condition may specifically be: a click count (e.g., a total count of operation triggers) for the target reference object reaching a preset threshold.

It can be seen that with respect to a client used by a viewer of a certain piece of video data, when the client is displaying a video playing page, the client may judge whether there is a first candidate object whose historical operation behavior information meets the preset operation condition among the at least one first candidate object corresponding to the video playing page after receiving a trigger operation (e.g., a click operation) for a target control on the video playing page; if there is, it may be determined that the viewer is interested in the "first candidate object whose historical operation behavior information meets the preset operation condition", so, the "first candidate object whose historical operation behavior information meets the preset operation condition" may be regarded as the target reference object, so that the target reference object may represent a characteristic (e.g., the category that the object the viewer is interested in belongs to) of the object the viewer is interested in.

Example 2: in some cases (e.g., in the case where the viewer of the above video playing page rarely performs trigger operations on the first candidate object corresponding to the video playing page), the viewer of the video playing page may be interested in an object being explained or an object that has been just explained on the video playing page. Based on this, the embodiment of the present disclosure further provides one possible implementation of the above preset condition, which may specifically include: a video explanation state of the target reference object on the video playing page meeting a preset state condition.

The preset state condition may be preset, for example, it may specifically be understood as follows: the above "video explanation state of the target reference object on the video playing page" represents that the video data played by the video playing page is explaining the target reference object (i.e., the "video explanation state of the target reference object on the video playing page" represents that the target reference object is in a state of being explained on the video playing page); or the "video explanation state of the target reference object on the video playing page" represents that the target reference object is in a state of having been explained on the video playing page, and an explanation completion moment of the target reference object being later than an explanation completion moment of other object in the state of having been explained on the video playing page (i.e., the "video explanation state of the target reference object on the video playing page" represents that the target reference object has been just explained on the video playing page).

Based on the content of the above-described two paragraphs, it can be known that with respect to a client used by a viewer of a certain piece of video data, when the client is displaying a video playing page, the client may judge whether there is a first candidate object whose historical operation behavior information meets the preset operation condition among the at least one first candidate object corresponding to the video playing page after receiving a trigger operation (e.g., a click operation) for the target control on the video playing page; if there isn't, the first candidate object whose video explanation state meets the preset state condition may be screened out of these first candidate objects according to the video explanation state of these first candidate objects on the video playing page, and the "first candidate object whose video explanation state meets the preset state condition" may be regarded as the target reference object, so that the target reference object may represent a characteristic (e.g., the category that the object the viewer is interested in belongs to) of the object the viewer is interested in.

In addition, a determination process of an object category of a certain object (e.g., the above target display object or the above target reference object) is not limited in the embodiments of the present disclosure; for example, it may be implemented by using any existing or future object classification determination process.

In addition, in order to better improve a classification effect, the embodiment of the present disclosure further provides a possible implementation of the above "a determination process of an object category of a certain object"; and for ease of understanding, it will be explained below by taking the determination process of the object category of the object to be classified as an example. The object to be classified may be any object (e.g., the above target display object or the above target reference object).

As an example, the determination process of the object category of the object to be classified may be as follows: determining the object category of the object to be classified according to object description information of the object to be classified and a pre-built object classification model. The object classification model is used for classifying the object description information of the object to be classified; moreover, an implementation of the object classification model is not limited in the embodiments of the present disclosure; for example, the object classification model may be implemented by using any existing or future model with a classification function.

In addition, in order to better improve a classification effect, the embodiment of the present disclosure further provides a possible implementation of the above step of "determining the object category of the object to be classified according to object description information of the object to be classified and a pre-built object classification model", which may specifically include a step 61 to a step 62 below.

Step 61: performing a feature extraction processing on the object description information of the object to be classified, to obtain a feature extraction result of the object to be classified, so that the feature extraction result can represent a characteristic possessed by the object to be classified.

The object description information of the object to be classified is used for describing the object to be classified; moreover, the "object description information of the object to be classified" is not limited in the embodiments of the present disclosure, for example, it may specifically include: video data (e.g., a live video, etc.), audio data (e.g., voice introduction data), text data (e.g., text introduction content, comments of users, etc.) that are used for displaying the object to be classified.

In addition, the implementation of the above step 61 is not limited in the embodiments of the present disclosure, for example, the above step 61 may be implemented by using any existing or future feature extracting method. For another example, in a possible implementation, the step 61 may specifically be implemented as follows: firstly, preprocessing the object description information of the object to be classified by using some information processing techniques (e.g., natural language processing (NLP), computer vision (CV), automatic speech recognition (ASR), etc.), to obtain a preprocess result; then performing the feature extraction processing on the preprocess result by using a deep learning algorithm, to obtain the feature extraction result of the object to be classified.

Step 62: inputting the feature extraction result of the object to be classified into a pre-built object classification model, to obtain an object category of the object to be classified output by the object classification model, so that the object category may represent a classification result of the object to be classified under at least one classification dimension (e.g., three dimensions such as object category, object attribute, object topic, etc.).

The object classification model is used for classifying input data of the object classification model under at least one classification dimension (e.g., three dimensions such as object category, object attribute, object topic, etc.).

In addition, the object classification model may be pre-trained by using object description information of at least one object for reference and classification annotation information of the at least one object for reference. The object description information of the object for reference is used for describing the object for reference; moreover, the object description information of the object for reference is similar to the relevant content of the above "object description information of the object to be classified"; and for brevity, no details will be repeated here. The classification annotation information of the object for reference is used for representing a classification situation of the object for reference under at least one classification dimension (e.g., three dimensions such as object category, object attribute, object topic, etc.); moreover, the classification annotation information of the object for reference is not limited in the embodiments of the present disclosure, for example, it may be implemented with the help of manual annotation.

In addition, the training process of the object classification model is not limited in the embodiments of the present disclosure; for example, it may specifically be implemented as follows: firstly, performing a feature extraction processing on object description information of the respective object for reference, to obtain a feature extraction result of the respective object for reference; and then training the object classification model by using the feature extraction result of at least one object for reference and classification annotation information of the at least one object for reference, so that the trained object classification model may classify the input data of the object classification model (e.g., a feature extraction result of a certain object) under at least one classification dimension.

It should be noted that an implementation of the above step "training the object classification model by using the feature extraction result of at least one object for reference and classification annotation information of the at least one object for reference" is not limited in the embodiments of the present disclosure, for example, it may be implemented by using any existing or future model training method based on training data.

It should also be noted that an implementation of the above step "performing a feature extraction processing on object description information of the respective object for reference, to obtain a feature extraction result of the respective object for reference" is similar to the implementation of the above step 61, so, for brevity, no details will be repeated here.

Based on the relevant content of the step 61 to the step 62 above, it can be known that after acquiring the object description information of the object to be classified, firstly the feature extraction processing may be performed on the object description information to obtain the feature extraction result of the object to be classified; and then the feature extraction result is input into the pre-built object classification model, so that the object classification model may determine the object category of the object to be classified according to the feature extraction result, so that the object category may represent a classification result of the object to be classified under at least one classification dimension (e.g., three dimensions such as object category, object attribute, object topic, etc.).

It should be noted that the determination process of the above "object category of the target display object" is similar to the determination process of the above "object category of the object to be classified"; and for brevity, no details will be repeated here. Similarly, the determination process of the above "object category of the target reference object" is similar to the determination process of the above "object category of the object to be classified".

In fact, with respect to the recommended information set deployed on the above information recommendation page, an information aggregative displaying mode of the recommended information set is not limited in the embodiments of the present disclosure; for example, in order to better improve user experience, the recommended information set may be displayed in the form of ranking list (e.g., the form of ranking list shown in Fig. 3).

In addition, an acquisition process of the above step of "determining these recommended information sets, according to an object category of the target reference object" is not limited in the embodiments of the present disclosure, for example, it may specifically be implemented as follows: searching for a candidate information set corresponding to the object category of the target reference object from a pre-built mapping relationship, and determining the candidate information set corresponding to the object category of the target reference object as the recommended information set. The mapping relationship is used for recording a one-to-one correspondence relationship between different object categories and different candidate information sets. It should be noted that an implementation of the candidate information set is similar to the implementation of the above recommended information set.

In addition, the above candidate information set may be pre-built; moreover, when the candidate information set is displayed in the form of ranking list, in order to better improve accuracy of ranking of information recorded in the candidate information set on the ranking list, the candidate information set may be built and updated in real time according to object related information (e.g., an interactive operation similar to trading, etc.) corresponding to some accounts involved in the candidate information set, so that the candidate information set can better improve real time performance of ranking of these accounts on the ranking list.

In addition, the building process of the above candidate information set are not limited in the embodiments of the present disclosure; for ease of understanding, it will be illustrated below by taking a building process of the j-*th* recommended information set as an example. j is a positive integer, j≤J, and J represents the number of the recommended information sets deployed on the above information recommendation page.

As an example, in the case where the above j-*th* recommended information set is implemented in the form of ranking list, and an object category corresponding to the j-*th* recommended information set is the target category, the building process of the j-*th* recommended information set may specifically include a step 71 to a step 74 below.

Step 71: determining at least one account to be used from at least one candidate account according to object supply information of the at least one candidate account, so that the object supply information of the account to be used is used for representing that an object category of a target use object under the account to be used is the same as the object category of the above j-*th* recommended information set.

The above "at least one candidate account" refers to an account (e.g., a live account) required for building an information recommendation ranking list; moreover, the "at least one alternative account" is not limited in the embodiments of the present disclosure, for example, the at least one alternative account may be a publish account for all live videos stored in one or more video applications.

The object supply information is used for describing the relevant content of an object supplied by an account; moreover, the object supply information is not limited in the embodiments of the present disclosure; for example, in the case where the account (e.g., the candidate account or the account to be used above) is used for supplying at least one second candidate object, the object supply information of the live video may include object categories of these second candidate objects. The second candidate object refers to an object on which some operations (e.g., interactive operations such as viewing and trading, etc.) may be performed within the live room corresponding to the account; the second candidate object is similar to the above first candidate object; and for brevity, no details will be repeated here.

The above "account to be used" refers to an account that may supply an object under the object category corresponding to the above j-*th* recommended information set.

The above "target use object" refers to an object under the object category corresponding to the j-*th* recommended information set supplied by the account to be used. For example, in the case where the object category corresponding to the above j-*th* recommended information set is the target category, the target use object refers to the object under the target category supplied by the account to be used. It can be seen that in the case where the display page of the account to be used may be used for displaying M second candidate objects, it may be judged whether there is a target category among object categories of the *m-th* second candidate object displayed on the display page; if there is a target category, then it may be determined that the object category of the *m-th* second candidate object is the same as the object category corresponding to the j-*th* recommended information set, so, the *m-th* second candidate object may be regarded as the target use object under the account to be used. m is a positive integer, m≤M, and M is a positive integer.

Based on the relevant content of step 71 above, it can be known that after acquiring the target reference object, if it is determined that there is a target category among the object categories corresponding to the target reference object, then it may be determined that the information recommendation ranking list corresponding to the target category needs to be built by using accounts to be used corresponding to other objects under the target category except the target reference object, so, firstly all candidate accounts are aggregate by using the target category, to obtain at least one account to be used, so that the respective accounts to be used may each supply at least one object under the target category, so that subsequently the information recommendation ranking list corresponding to the target category may be built by using these accounts to be used.

Step 72: determining recommendation representation data of the at least one account to be used according to object interaction information of the at least one account to be used.

The object interaction information is used for describing an interaction situation (e.g., an operation situation and/or a trading situation, etc.) triggered for an object under the account to be used; moreover, the object interaction information is not limited in the embodiments of the present disclosure, for example, it may include real-time sales volume of objects. The real-time sales volume of objects refers to the quantity of real-time sales of all objects under the account to be used.

The above "recommendation representation data of the at least one account to be used" is used for describing a likelihood that the account to be used is recommended to the user; moreover, the larger the recommendation representation data of the account to be used, the greater the likelihood that the account to be used is recommended to the user; the smaller the recommendation representation data of the account to be used, the less the likelihood that the account to be used is recommended to the user.

In addition, a determination process of the above "recommendation representation data of the at least one account to be used" IS not limited in the embodiments of the present disclosure, for example, in the case where the above object interaction information includes the real-time sales volume of objects, the determination process of the "recommendation representation data of the at least one account to be used" may specifically be implemented as follows: determining the recommendation representation data of the account to be used according to the real-time sales volume of objects of the account to be used, so that the recommendation representation data of the account to be used is proportional to the real-time sales volume of objects of the account to be used.

Based on the relevant content of the above step 72, it can be known that after acquiring the at least one account to be used under the above target category, the recommendation representation data of the respective accounts to be used may be determined according to the object interaction information of the respective accounts to be used (e.g., the total sales of all objects), so that the recommendation representation data of the respective accounts to be used may represent a likelihood that the respective accounts to be used are recommended to the user.

Step 73: determining at least one account to be displayed that meets a preset recommendation condition from the at least one account to be used according to the recommendation representation data of the at least one account to be used. The account to be displayed refers to an account to be used that meets the preset recommendation condition.

The preset recommendation condition may be preset, for example, it may specifically be T accounts to be used whose recommendation representation data is the largest. T is a positive integer.

Based on the relevant content of step 73 above, it can be known that with respect to the at least one account to be used under the above target category, after acquiring the recommendation representation data of the respective accounts to be used, these accounts to be used may be ranked according to the recommendation representation data of these accounts to be used, to obtain a ranking result, so that the ranking result may represent a ranking state of these accounts to be used when sorted in a descending order of the recommendation representation data; then, the top T accounts to be used in the ranking result are all regarded as the accounts to be displayed (i.e., accounts that need information display on the ranking list), so that subsequently the ranking list may be built based on these accounts to be displayed.

Step 74: building the j-*th* recommended information set according to the relevant information of the at least one account to be displayed (e.g., account attribute information and/or object display information of a target display object under the account to be displayed), as well as recommendation representation data of the at least one account to be displayed, so that the j-*th* recommended information set may display the relevant information of these accounts to be displayed in the form of a ranking list.

In the embodiment of the present disclosure, after acquiring the at least one account to be displayed and the recommendation representation data of the at least one account to be displayed, the relevant information of these accounts to be displayed may be ranked in a descending order of the recommendation representation data according to the recommendation representation data of these accounts to be displayed, to obtain a ranking result; and then, the recommended information set (i.e., the above j-*th* recommended information set) corresponding to the target category is built according to the ranking result, so that the recommended information set may recommend these accounts to be displayed to the user according to the ranking result.

Based on the relevant content of step 71 to step 74 above, it can be known that after acquiring the target reference object, if it is determined that there is a target category among the object categories corresponding to the target reference object, then firstly at least one account to be used under the target category may be selected from a large number of candidate accounts by using the target category; and then, the at least one account to be used are ranked according to the object interaction information of the at least one account to be used, to obtain the recommended information set corresponding to the target category, so that the recommended information set may represent object recommendation information under the target category.

It should be noted that the building process of the above "candidate information set" is similar to the building process shown in the step 71 to the step 74 above; and for brevity, no details will be repeated here.

Based on the relevant content of S501 to S502 above, it can be known that with respect to the display method provided by the embodiment of the present disclosure, when the client is displaying a video playing page, the client displays an information recommendation page after receiving a trigger operation (e.g., a click operation) for the target control on the video playing page. The information recommendation page, includes several recommended information sets, and each recommended information set corresponds to a different object category; each recommended information set includes account attribute information of several candidate accounts; objects to be displayed under each candidate account in the same recommended information set each include a target display object; and an object category of the target display object is the same as an object category corresponding to the recommended information set.

It can be seen that since the above information recommendation page includes several recommended information sets, and each recommended information set corresponds to a different object category, so that the information recommendation page may supply the user with recommended information sets under some object categories, and the user may view recommended information sets under different object categories from the information recommendation page, which can better meet information viewing needs of the user and improve user experience.

In fact, in order to better improve user experience, the embodiment of the present disclosure further provides a possible implementation of the above target control; in this implementation, the target control displays prompt information (e.g., such information as the *"9-th* place on the retro women's clothing list" shown in Fig. 2), so that the prompt information may prompt the viewer of the above video playing page that the viewer may view a ranking list corresponding to objects the viewer is interested in.

In addition, in order to better improve user experience, the prompt information displayed on the above target control will change with the change of the object the user is interested in. Based on this, the embodiment of the present disclosure further provides another possible implementation of the above display method; in this implementation, in the case where the display method at least includes the step S501 above, the display method further includes a step S503 below. Execution time of the step S503 is later than execution time of the step S501; moreover, the execution time of the step S503 is not limited in the embodiments of the present disclosure.

S503: updating ranking position description information of the account corresponding to the above video playing page, and updating the prompt information on the target control by using the ranking position description information, after the above target reference object is updated. The ranking position description information is used for describing a ranking position of the account attribute information of the account corresponding to the video playing page in the recommended information set corresponding to the target reference object.

In addition, the above ranking position description information is not limited in the embodiments of the present disclosure, for example, the ranking position description information may be such information as the *"9-th* place on the retro women's clothing list" shown in Fig. 2).

In addition, a determination process of the above ranking position description information is not limited in the embodiments of the present disclosure, for example, in the case that there is only one category in the object category of the above target reference object, the target reference object may correspond to only one recommended information set, so the ranking position of the account attribute information of the account corresponding to the video playing page in the above "recommended information set corresponding to the target reference object" may be directly determined as the above ranking position description information. For another example, in the case that there are a plurality of categories in the object categories of the target reference object, the target reference object may correspond to a plurality of recommended information sets, so the ranking position description information may be determined from the ranking position of the account attribute information of the account corresponding to the video playing page in these recommended information sets according to a preset rule (e.g., different object categories corresponding to different priorities), so that the ranking position description information can describe the ranking position of the account corresponding to the video playing page in a certain recommended information set.

Furthermore, the update time of the above target reference object is not limited in the embodiments of the present disclosure, for example, the target reference object may be updated once every time interval. For another example, an update process of the target reference object may be executed once immediately after one operation is triggered for a certain object on the above video playing page.

Based on the relevant content of the step S503 above, it can be known that with respect to a client used by a viewer of a certain video data, when the client is displaying a video playing page, after the update process for the above target reference object is completed, the client may update the recommended information set corresponding to the target reference object with the help of the object category of the target reference object; and further update the displayed content of the target control based on the ranking position of the account corresponding to the video playing page in the recommended information set, which can ensure real-time performance of the displayed content of the target control, and thus is favorable for improving user experience.

Based on the display method provided by the embodiment of the present disclosure, an embodiment of the present disclosure further provides a display apparatus, which will be explained and illustrated below in conjunction with Fig. 6. Fig. 6 is a structural schematic diagram of the display apparatus provided by the embodiment of the present disclosure. It should be noted that relevant content of the above display method may be referred to for technical details of the display apparatus provided by the embodiment of the present disclosure.

As shown in Fig. 6, the display apparatus 600 provided by the embodiment of the present disclosure includes:

a third display unit 601, configured to display a video playing page; the video playing page includes a target control;
a fourth display unit 602, configured to display an information recommendation page in response to a trigger operation for the target control;
the information recommendation page includes several recommended information sets, and each recommended information set corresponds to a different object category; each recommended information set includes account attribute information of several candidate accounts, objects to be displayed under each candidate account in the same recommended information set include a target display object, and an object category of the target display object is the same as an object category corresponding to the recommended information set.

In one possible implementation, the display apparatus 600 further includes:
a fifth display unit, configured to display an information display page corresponding to a target account in response to a trigger operation for account attribute information of the target account, in the case where the information recommendation page displays the account attribute information of the target account among the several candidate accounts.

In one possible implementation, each recommended information set further includes object display information of a target display object under several candidate accounts.

In one possible implementation, the object display information includes at least one of text description information and picture description information.

In one possible implementation, the display apparatus 600 further includes:
a sixth display unit, configured to display the information display page corresponding to the target account, and display an information display interface corresponding to the target display object under the target account on the information display page corresponding to the target account, in response to a trigger operation for the object display information, in the case where the information recommendation page displays the object display information of the target display object under the target account among the several candidate accounts.

In one possible implementation, the information recommendation page further includes several category tags; there is one-to-one correspondence relationship between the several category tags and the several recommended information sets; and the recommended information set being currently displayed on the information recommendation page is a recommended information set corresponding to a first tag among the several category tags;

the display apparatus 600 further includes:

a seventh display unit, configured to switch the recommended information set displayed on the information recommendation page from the recommended information set corresponding to the first tag to a recommended information set corresponding to a second tag, in response to a trigger operation for the second tag among the several category tags.

In one possible implementation, there is a target reference object that meets a preset condition among the at least one first candidate object corresponding to the video playing page;

the object category corresponding to the recommended information set is same as an object category of the target reference object.

In one possible implementation, the preset condition is: a video explanation state of the target reference object on the video playing page meeting a preset state condition;

or,

the preset condition is: historical operation information of the target reference object meeting a preset operation condition.

In one possible implementation, the object category of the target display object is determined according to object description information of the target display object and a pre-built object classification model; the object classification model is used for classifying the object description information of the target display object.

In one possible implementation, the object classification model is trained by using object description information of at least one object for reference and classification annotation information of the at least one object for reference.

In one possible implementation, the video playing page is used for displaying a first live video; and/or, an information display page corresponding to the candidate account is used for displaying a second live video.

In one possible implementation, the account attribute information comprises at least one of an identifier icon corresponding to the candidate account and an identifier text corresponding to the candidate account.

Based on the relevant content of the above-described display apparatus 600, it can be known that with respect to the display apparatus 600 provided by the embodiment of the present disclosure, when displaying the video playing page, the display apparatus 600 may display at least one first candidate commodity to the viewer; and after receiving a trigger operation (e.g., a click operation) for the target control on the video playing page, the display apparatus 600 displays the information recommendation page. The information recommendation page is used for displaying at least one live video to be displayed, and the at least one live video to be displayed is determined according to classification description information of a first target commodity among these first candidate commodities. The classification description information is used for describing a class affiliation of the first target commodity.

It can be seen that since historical operation information of the above first target commodity meets a first preset condition, it may be inferred that the viewer is more interested in the first target commodity. Therefore, it may be inferred that the viewer is likely to be interested in other commodity (e.g., other commodity under the same commodity class, other commodity under the same commodity topic, other commodity under the same commodity attribute, etc.) related to the first target commodity, so that at least one live video to be displayed determined based on the classification description information of the first target commodity may supply the viewer with some other commodity related to the first target commodity, and thus the commodity displayed in these live videos can meet the commodity viewing needs of the viewer as much as possible, which is favorable for improving viewing experience for the viewer with respect to other commodity related to the first target commodity, and thus is favorable for improving user experience.

In addition, the embodiment of the application further provides an electronic device which comprises a processor and a memory, the memory is used for storing instructions or computer programs; the processor is used for executing the instructions or computer programs in the memory, so that the electronic device can execute any one of the implementations of the display method provided by the embodiments of the present disclosure.

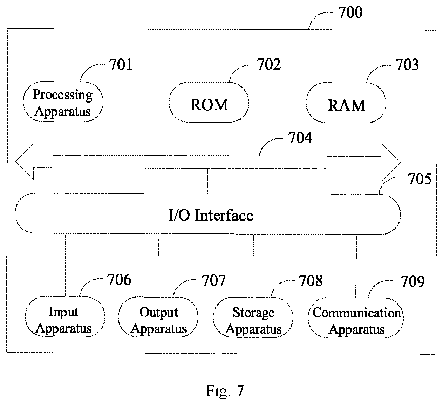

Referring to Fig. 7, Fig. 7 illustrates a schematic structural diagram of an electronic device 700 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 7 is merely an example, and should not pose any limitation to the functions and the range of use of the embodiments of the present disclosure.

As illustrated in Fig. 7, the electronic device 700 may include a processing apparatus 701 (e.g., a central processing unit, a graphics processing unit, etc.), which can perform various suitable actions and processing according to a program stored in a read-only memory (ROM) 702 or a program loaded from a storage apparatus 708 into a random-access memory (RAM) 703. The RAM 703 further stores various programs and data required for operations of the electronic device 700. The processing apparatus 701, the ROM 702, and the RAM 703 are interconnected by means of a bus 704. An input/output (I/O) interface 705 is also connected to the bus 704.

Usually, the following apparatus may be connected to the I/O interface 705: an input apparatus 706 including, for example, a touch screen, a touch pad, a keyboard, a mouse, a camera, a microphone, an accelerometer, a gyroscope, or the like; an output apparatus 707 including, for example, a liquid crystal display (LCD), a loudspeaker, a vibrator, or the like; a storage apparatus 708 including, for example, a magnetic tape, a hard disk, or the like; and a communication apparatus 709. The communication apparatus 709 may allow the electronic device 700 to be in wireless or wired communication with other devices to exchange data. While Fig. 7 illustrates the electronic device 700 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 709 and installed, or may be installed from the storage apparatus 708, or may be installed from the ROM 702. When the computer program is executed by the processing apparatus 701, the above-mentioned functions defined in the methods of some embodiments of the present disclosure are performed.

The electronic device provided by the embodiment of this disclosure belongs to the same inventive concept as the method provided by the above embodiment, and the technical details not described in detail in this embodiment can be found in the above embodiment, and this embodiment has the same beneficial effects as the above embodiment.

The embodiment of the application further provides a computer-readable medium, instructions or computer programs are stored in the computer-readable medium, and upon the instructions or computer programs being run on a device, the device is caused to execute any one of the implementations of the display method provided by the embodiments of the application.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and upon the one or more programs being executed by the electronic device, the electronic device is caused to execute the above mentioned method.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

It should be noted that the various embodiments in this specification are described in a progressive way, and each embodiment focuses on the differences from other embodiments, so it is only necessary to refer to the same and similar parts among the various embodiments. As for the system or device disclosed in the embodiment, because it corresponds to the method disclosed in the embodiment, the description is relatively simple, and the related points can be found in the description of the method part.

It should be understood that in this application, "at least one (item)" refers to one or more, and "multiple/a plurality of" refers to two or more. "and/or" is used to describe the relationship of related objects, indicating that there can be three kinds of relationships. For example, "A and/or B" can indicate that there are only A, only B and both A and B, where A and B can be singular or plural. The character "/"generally indicates that the context object is an OR relationship. "At least one of the following items (items)" or its similar expression refers to any combination of these items, including any combination of single items (items) or plural items (items). For example, at least one of a, b or c can be expressed as: a, b, c, a and b, a and c, b and c, or a and b and c, where a, b and c can be single or multiple.

It should also be noted that in this paper, relational terms such as first and second are only used to distinguish one entity or operation from another entity or operation, and do not necessarily require or imply that there is any such actual relationship or order between these entities or operations. Moreover, the terms "including", "including" or any other variation thereof are intended to cover non-exclusive inclusion, so that a process, method, article or equipment including a series of elements includes not only those elements, but also other elements not explicitly listed or elements inherent to such process, method, article or equipment. Without further restrictions, an element defined by the phrase "including one" does not exclude the existence of other identical elements in the process, method, article or equipment including the element.

The steps of a method or algorithm described in connection with the embodiments disclosed herein may be directly implemented in hardware, a software module executed by a processor, or a combination of the two. The software module can be placed in random access memory (RAM), internal memory, read-only memory (ROM), electrically programmable ROM, electrically erasable programmable ROM, register, hard disk, removable disk, CD-ROM, or any other storage medium known in the technical field.

The above description of the disclosed embodiments enables those skilled in the art to make or use this application. Many modifications to these embodiments will be obvious to those skilled in the art, and the general principles defined herein can be implemented in other embodiments without departing from the spirit or scope of this application. Therefore, this application will not be limited to the embodiments shown herein, but is to be accorded the widest scope consistent with the principles and novel features disclosed herein.

**Claims**

1. A display method, comprising:

   displaying a video playing page; and
   displaying an information recommendation page, in response to a trigger operation for a target control on the video playing page, wherein a recommended information set corresponding to an object for reference is displayed on the information recommendation page; the object for reference is determined according to follow state representation information of at least one first candidate object corresponding to the video playing page; the recommended information set comprises account attribute information of several candidate accounts, objects to be displayed under each of the candidate accounts comprise a target display object, an object category of the target display object is same as an object category corresponding to the recommended information set; and the object category corresponding to the recommended information set is same as an object category of the object for reference.

2. The method according to claim 1, wherein the follow state representation information comprises historical operation behavior information and video explanation information;

   if the historical operation behavior information of a first target object among the at least one first candidate object meets a first preset condition, then the object for reference is determined according to the first target object;
   if none of the historical operation behavior information of the respective first candidate objects meets the first preset condition, then the object for reference is determined according to video explanation information of the at least one first candidate object.

3. The method according to claim 2, wherein if none of the historical operation behavior information of the respective first candidate objects meets the first preset condition, and video explanation information of a second target object among the at least one first candidate object meets a second preset condition, then the object for reference is determined according to the second target object.

4. The method according to claim 2 or 3, wherein the historical operation behavior information comprises a click count;
   the first preset condition is a click count of the first target object being greater than a preset count threshold.

5. The method according to claim 3, wherein the second preset condition comprises: the video explanation information of the second target object being that the second target object is in a state of being explained on the video playing page;
   or,
   the second preset condition comprises: the video explanation information of the second target object being that the second target object is in a state of having been explained on the video playing page, and an explanation completion moment of the second target object is later than an explanation completion moment of other object in the state of having been explained on the video playing page.

6. The method according to claim 1, wherein the follow state representation information comprises historical operation behavior information; and
   after displaying the video playing page, the method further comprises:
   updating historical operation behavior information of a third target object, in response to a trigger operation for the third target object among the at least one first candidate object corresponding to the video playing page.

7. The method according to claim 1, wherein the recommended information set further comprises object display information of the target display object under each of the candidate accounts.

8. The method according to claim 1, wherein an object to be classified is the object for reference or the target display object;

an object category of the object to be classified is determined according to object description information of the object to be classified and a pre-built object classification model; and the object classification model is used for classifying the object description information of the object to be classified.

9. The method according to claim 1, wherein the video playing page is used for displaying a first live video; and/or, an information display page corresponding to the candidate account is used for displaying a second live video.

10. A display apparatus, comprising:

a first display unit, configured to display a video playing page; and
a second display unit, configured to display an information recommendation page, in response to a trigger operation for a target control on the video playing page, wherein a recommended information set corresponding to an object for reference is displayed on the information recommendation page; the object for reference is determined according to follow state representation information of at least one first candidate object corresponding to the video playing page; the recommended information set comprises account attribute information of several candidate accounts, objects to be displayed under each of the candidate accounts comprises a target display object, an object category of the target display object is same as an object category corresponding to the recommended information set; and the object category corresponding to the recommended information set is same as an object category of the object for reference.

11. A display method, comprising:

displaying a video playing page, wherein the video playing page comprises a target control; and
displaying an information recommendation page, in response to a trigger operation for the target control,
wherein the information recommendation page comprises several recommended information sets, and each of the recommended information sets corresponds to a different object category; each of the recommended information sets comprises account attribute information of several candidate accounts, each of objects to be displayed under each candidate account in a same recommended information set comprises a target display object, and an object category of the target display object is same as an object category corresponding to the recommended information set.

12. The method according to claim 11, wherein the information recommendation page displays account attribute information of a target account among the several candidate accounts, and the method further comprises:

displaying an information display page corresponding to the target account, in response to a trigger operation for the account attribute information of the target account.

13. The method according to claim 11, wherein each recommended information set further comprises object display information of a target display object under several candidate accounts.

14. The method according to claim 13, wherein the object display information comprises at least one of text description information and picture description information.

15. The method according to claim 13, wherein upon the information recommendation page displaying the object display information of the target display object under the target account among the several candidate accounts, the method further comprises:

displaying the information display page corresponding to the target account, and displaying an information display interface corresponding to the target display object under the target account on the information display page corresponding to the target account, in response to a trigger operation for the object display information.

16. The method according to claim 11, wherein the information recommendation page further comprises several category tags; there is one-to-one correspondence between the several category tags and the several recommended information sets; and the recommended information set being currently displayed on the information recommendation page is a recommended information set corresponding to a first tag among the several category tags;

the method further comprises:
switching the recommended information set displayed on the information recommendation page from the recommended information set corresponding to the first tag to a recommended information set corresponding to a second tag, in response to a trigger operation for the second tag among the several category tags.

17. The method according to claim 11, wherein there is a target reference object that meets a preset condition among at least one first candidate object corresponding to the video playing page;
the object category corresponding to the recommended information set is same as an object category of the target reference object.

18. The method according to claim 17, wherein the preset condition is: a video explanation state of the target reference object on the video playing page meeting a preset state condition;
or,
the preset condition is: historical operation information of the target reference object meeting a preset operation condition.

19. The method according to claim 11, wherein the object category of the target display object is determined according to object description information of the target display object and a pre-built object classification model; the object classification model is used for classifying the object description information of the target display object; and the object classification model is trained by using object description information of at least one object for reference and classification annotation information of the at least one object for reference.

20. The method according to claim 11, wherein the video playing page is used for displaying a first live video; and/or, an information display page corresponding to the candidate account is used for displaying a second live video.

21. The method according to claim 11, wherein the account attribute information comprises at least one of an identifier icon corresponding to the candidate account and an identifier text corresponding to the candidate account.

22. A display apparatus, comprising:

a first display unit, configured to display a video playing page, wherein the video playing page comprises a target control; and
a second display unit, configured to display an information recommendation page, in response to a trigger operation for the target control, wherein an information recommendation page comprises several recommended information sets, and each of the recommended information sets corresponds to a different object category; each of the recommended information sets comprises account attribute information of several candidate accounts, and objects to be displayed under each candidate account in a same recommended information set each comprises a target display object, and an object category of the target display object is same as an object category corresponding to the recommended information set.

23. An electronic device, comprising: a processor and a memory;

the memory is configured to store instructions or computer programs; and
the processor is configured to execute the instructions or the computer programs in the memory, so as to cause the electronic device to execute the method according to any one of claims 1 to 9 or execute the method according to any one of claims 11 to 21.

24. A computer-readable medium, with instructions or computer programs stored thereon, wherein upon the instructions or computer programs running on a device, the device is caused to execute the method according to any one of claims 1 to 9 or execute the method according to any one of claims 11 to 21.

25. A computer program product, comprising a computer program carried on a non-temporary computer readable medium, wherein the computer program comprises program codes for executing the method according to any one of claims 1 to 9 or executing the method according to any one of claims 11 to 21.

displaying a video playing page — S101

displaying an information recommendation page, in response to a trigger operation for a target control on the video playing page, in which a recommended information set corresponding to an object for reference is displayed on the information recommendation page, the object for reference is determined according to follow state representation information of at least one first candidate object corresponding to the video playing page, the recommended information set comprises account attribute information of several candidate accounts, objects to be displayed under each of the candidate accounts comprise a target display object, an object category of the target display object is same as an object category corresponding to the recommended information set, and the object category corresponding to the recommended information set is same as an object category of the object for reference — S102

Fig. 1

200

9:40

Host nickname······ Follow
1234 likes for this session

200,000+ X

The 9-th place on
the retro women's
clothing list

Hour ranking

More live broadcasts >

201

User nickname...
Send roses ×30

Avatar of audience 1 | Nickname of audience 1
**Is quality of the clothes good?**

Avatar of audience 2 | Nickname of audience 2
**The clothes look great**

Avatar of audience 3 | Nickname of audience 3
**What material is it made of?**

202

Say something...

Fig. 2

300

9:40

Host nickname ······ Follow
1234 likes for this session

300,000+ ✕

The 9-th place on the retro women's clothing list

Hour ranking

More live broadcasts >

301

Sales ranking list

Closed after 25:29 (?)

| Overall ranking list | Retro women's clothing | Clothing/shoe/bag | Mother and baby supply/book |

302

| 1 | Avatar of the first live room | **Nickname of the first live room**<br>**Recommended product: short skirt** | **630,000** |
| 2 | Avatar of the second live room | **Nickname of the second live room**<br>**Recommended product: cool slip summer dress** | **600,000** |
| 3 | Avatar of the third live room | **Nickname of the third live room**<br>**Recommended product: spring sunshine cardigan** | **500,000** |
| 4 | Avatar of the fourth live room | **Nickname of the fourth live room**<br>**Recommended product: sleeveless T shirt** | **450,000** |

**Nickname of the fifth live room**

| 9 | | Host nickname ······ | View the product |

Fig. 3

400

Display Apparatus

First Display Unit — 401

Second Display Unit — 402

Fig. 4

displaying a video playing page, in which the video playing page includes a target control — S501

displaying an information recommendation page in response to a trigger operation for the target control, in which the information recommendation page includes several recommended information sets, and each recommended information set corresponds to a different object category, each recommended information set includes account attribute information of several candidate accounts, and objects to be displayed under each candidate account in the same recommended information set include a target display object, and an object category of the target display object is the same as an object category corresponding to the recommended information set — S502

Fig. 5

600

Display Apparatus

Third Display Unit — 601

Fourth Display Unit — 602

Fig. 6

Fig. 7

## INTERNATIONAL SEARCH REPORT

| International application No. |
| --- |
| **PCT/CN2023/116565** |

### A. CLASSIFICATION OF SUBJECT MATTER

H04N21/431(2011.01)i; G06F3/0483(2013.01)i

According to International Patent Classification (IPC) or to both national classification and IPC

### B. FIELDS SEARCHED

Minimum documentation searched (classification system followed by classification symbols)

H04N21/-; G06F3/-

Documentation searched other than minimum documentation to the extent that such documents are included in the fields searched

Electronic data base consulted during the international search (name of data base and, where practicable, search terms used)

CNTXT, ENTXTC, CNKI: 直播, 推荐, 页面, 界面, 窗口, 列表, 榜单, 热销榜, 热卖榜, 商品, 产品, 货物, 物品, 分类, 类目, 品类, 类别, 相同, 相似, 关联, 交互, 互动, 点击, 参与, 收藏, 购买, 次数, 频次, 关注度, 兴趣度, 当前, 正在, 讲解 VEN, ENTXT: live, broadcasting, recommend, page, interface, window, list, product, item, classify, class, category, interaction, click, buy, interestingness, attention, introduction

### C. DOCUMENTS CONSIDERED TO BE RELEVANT

| Category* | Citation of document, with indication, where appropriate, of the relevant passages | Relevant to claim No. |
| --- | --- | --- |
| X | CN 113608651 A (BEIJING BYTEDANCE NETWORK TECHNOLOGY CO., LTD.) 05 November 2021 (2021-11-05) description, paragraphs 31-111, and figures 1-5 | 1-10 |
| Y | CN 113608651 A (BEIJING BYTEDANCE NETWORK TECHNOLOGY CO., LTD.) 05 November 2021 (2021-11-05) description, paragraphs 31-111, and figures 1-5 | 11-25 |
| Y | CN 114650430 A (BEIJING DAJIA INTERNET INFORMATION TECHNOLOGY CO., LTD.) 21 June 2022 (2022-06-21) description, paragraphs 135-271, and figures 2-7 | 11-25 |
| A | CN 113065008 A (BEIJING DAJIA INTERNET INFORMATION TECHNOLOGY CO., LTD.) 02 July 2021 (2021-07-02) entire document | 1-25 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 November 2023** | **28 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| :--- |
| **PCT/CN2023/116565** |

**C.    DOCUMENTS CONSIDERED TO BE RELEVANT**

| Category* | Citation of document, with indication, where appropriate, of the relevant passages | Relevant to claim No. |
| :---: | :--- | :---: |
| A | CN 113225580 A (BEIJING DAJIA INTERNET INFORMATION TECHNOLOGY CO., LTD.) 06 August 2021 (2021-08-06)<br>entire document | 1-25 |
| A | CN 112399200 A (TENCENT TECHNOLOGY (SHENZHEN) CO., LTD.) 23 February 2021 (2021-02-23)<br>entire document | 1-25 |
| A | CN 114885185 A (ALIBABA (CHINA) CO., LTD.) 09 August 2022 (2022-08-09)<br>entire document | 1-25 |
| A | KR 102432589 B1 (SEASONLESS CO., LTD.) 17 August 2022 (2022-08-17)<br>entire document | 1-25 |

Form PCT/ISA/210 (second sheet) (July 2022)

**INTERNATIONAL SEARCH REPORT**
Information on patent family members

International application No.

**PCT/CN2023/116565**

| Patent document cited in search report | | | Publication date (day/month/year) | Patent family member(s) | | | Publication date (day/month/year) |
|---|---|---|---|---|---|---|---|
| CN | 113608651 | A | 05 November 2021 | WO | 2023016409 | A1 | 16 February 2023 |
| CN | 114650430 | A | 21 June 2022 | None | | | |
| CN | 113065008 | A | 02 July 2021 | None | | | |
| CN | 113225580 | A | 06 August 2021 | CN | 113225580 | B | 24 January 2023 |
| CN | 112399200 | A | 23 February 2021 | HK | 40038341 | A0 | 25 June 2021 |
| | | | | CN | 112399200 | B | 06 January 2023 |
| CN | 114885185 | A | 09 August 2022 | None | | | |
| KR | 102432589 | B1 | 17 August 2022 | None | | | |

Form PCT/ISA/210 (patent family annex) (July 2022)

**REFERENCES CITED IN THE DESCRIPTION**

**Patent documents cited in the description**

- JP 202211072095 B
- JP 202211075030X B